# EUROPEAN PATENT APPLICATION

(11) **EP 4 472 330 A1**
(43) Date of publication of application: **04.12.2024**
(21) Application number: 23216934.2
(22) Date of filing: 14.12.2023
(51) Int. Cl.: H04W 76/15, H04W 92/20

(54) **APPARATUS, SYSTEM, AND METHOD OF TRANSMITTING A JOINT TRANSMISSION**

(30) Priority: 31.05.2023 US 202318326704
(71) Applicant: INTEL Corporation, Santa Clara, CA 95054 (US)
(72) Inventor: CARIOU, Laurent, Santa Clara, 95054 (US); KENNEY, Thomas J., Santa Clara, 95054 (US); BRAVO, Daniel, Santa Clara, 95054 (US)
(74) Representative: Rummler, Felix

(57) **Abstract**

For example, a first Access Point (AP) may be configured to send a plurality of data packets to a second AP via a backhaul link between the first AP and the second AP; to determine a plurality of identified packets from the plurality of data packets for a joint transmission to a non-AP wireless communication station (STA) associated with the first AP; to transmit a multi-AP trigger frame to trigger the joint transmission including transmission of the plurality of identified packets in a first transmission from the first AP and in a second transmission from the second AP, wherein the multi-AP trigger frame includes payload-signaling information configured to signal to the second AP that a payload of the second transmission is to include the plurality of identified packets; and to transmit the first transmission after the multi-AP trigger frame, wherein the first transmission includes the plurality of identified packets.

## Description

### TECHNICAL FIELD

Aspects described herein generally relate to transmitting a joint transmission.

### BACKGROUND

An Access Point (AP) may be configured to transmit Downlink (DL) transmissions to one or more wireless communication stations (STAs).

Beamforming techniques may be implemented by some wireless communication networks to support enhanced throughput.

### BRIEF DESCRIPTION OF THE DRAWINGS

For simplicity and clarity of illustration, elements shown in the figures have not necessarily been drawn to scale. For example, the dimensions of some of the elements may be exaggerated relative to other elements for clarity of presentation. Furthermore, reference numerals may be repeated among the figures to indicate corresponding or analogous elements. The figures are listed below.
Fig. 1 is a schematic block diagram illustration of a system, in accordance with some demonstrative aspects.
Fig. 2 is a schematic flow-chart illustration of a method of transmitting a j oint transmission, in accordance with some demonstrative aspects.
Fig. 3 is a schematic flow-chart illustration of a method of transmitting aj oint transmission, in accordance with some demonstrative aspects.
Fig. 4 is a schematic illustration of a product of manufacture, in accordance with some demonstrative aspects.

### DETAILED DESCRIPTION

In the following detailed description, numerous specific details are set forth in order to provide a thorough understanding of some aspects. However, it will be understood by persons of ordinary skill in the art that some aspects may be practiced without these specific details. In other instances, well-known methods, procedures, components, units and/or circuits have not been described in detail so as not to obscure the discussion.

Discussions herein utilizing terms such as, for example, "processing", "computing", "calculating", "determining", "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

The terms "plurality" and "a plurality", as used herein, include, for example, "multiple" or "two or more". For example, "a plurality of items" includes two or more items.

References to "one aspect", "an aspect", "demonstrative aspect", "various aspects" etc., indicate that the aspect(s) so described may include a particular feature, structure, or characteristic, but not every aspect necessarily includes the particular feature, structure, or characteristic. Further, repeated use of the phrase "in one aspect" does not necessarily refer to the same aspect, although it may.

As used herein, unless otherwise specified the use of the ordinal adjectives "first", "second", "third" etc., to describe a common object, merely indicate that different instances of like objects are being referred to, and are not intended to imply that the objects so described must be in a given sequence, either temporally, spatially, in ranking, or in any other manner.

Some aspects may be used in conjunction with various devices and systems, for example, a User Equipment (LTE), a Mobile Device (MD), a wireless station (STA), a Personal Computer (PC), a desktop computer, a mobile computer, a laptop computer, a notebook computer, a tablet computer, a server computer, a handheld computer, a handheld device, a wearable device, a sensor device, an Internet of Things (IoT) device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some aspects may be used in conjunction with devices and/or networks operating in accordance with existing IEEE 802.11 standards (including IEEE 802.11-2020 *(*IEEE 802.11-2020, IEEE Standard for Information Technology Telecommunications and Information Exchange between Systems Local and Metropolitan Area Networks Specific Requirements; Part 11: Wireless LAN Medium Access Control (MAC) and Physical Layer (PHY) Specifications, December, 2020*))* and/or future versions and/or derivatives thereof, devices and/or networks operating in accordance with existing cellular specifications and/or protocols, and/or future versions and/or derivatives thereof, units and/or devices which are part of the above networks, and the like.

Some aspects may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multistandard radio devices or systems, a wired or wireless handheld device, e.g., a Smartphone, a Wireless Application Protocol (WAP) device, or the like.

Some aspects may be used in conjunction with one or more types of wireless communication signals and/or systems, for example, Radio Frequency (RF), Infra-Red (IR), Frequency-Division Multiplexing (FDM), Orthogonal FDM (OFDM), Orthogonal Frequency-Division Multiple Access (OFDMA), FDM Time-Division Multiplexing (TDM), Time-Division Multiple Access (TDMA), Multi-User MIMO (MU-MIMO), Spatial Division Multiple Access (SDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth^{®}, Global Positioning System (GPS), Wi-Fi, Wi-Max, ZigBee^{™}, Ultra-Wideband (UWB), 4G, Fifth Generation (5G), or Sixth Generation (6G) mobile networks, 3GPP, Long Term Evolution (LTE), LTE advanced, Enhanced Data rates for GSM Evolution (EDGE), or the like. Other aspects may be used in various other devices, systems and/or networks.

The term "wireless device", as used herein, includes, for example, a device capable of wireless communication, a communication device capable of wireless communication, a communication station capable of wireless communication, a portable or non-portable device capable of wireless communication, or the like. In some demonstrative aspects, a wireless device may be or may include a peripheral that may be integrated with a computer, or a peripheral that may be attached to a computer. In some demonstrative aspects, the term "wireless device" may optionally include a wireless service.

The term "communicating" as used herein with respect to a communication signal includes transmitting the communication signal and/or receiving the communication signal. For example, a communication unit, which is capable of communicating a communication signal, may include a transmitter to transmit the communication signal to at least one other communication unit, and/or a communication receiver to receive the communication signal from at least one other communication unit. The verb communicating may be used to refer to the action of transmitting or the action of receiving. In one example, the phrase "communicating a signal" may refer to the action of transmitting the signal by a first device, and may not necessarily include the action of receiving the signal by a second device. In another example, the phrase "communicating a signal" may refer to the action of receiving the signal by a first device, and may not necessarily include the action of transmitting the signal by a second device. The communication signal may be transmitted and/or received, for example, in the form of Radio Frequency (RF) communication signals, and/or any other type of signal.

As used herein, the term "circuitry" may refer to, be part of, or include, an Application Specific Integrated Circuit (ASIC), an integrated circuit, an electronic circuit, a processor (shared, dedicated or group), and/or memory (shared. Dedicated, or group), that execute one or more software or firmware programs, a combinational logic circuit, and/or other suitable hardware components that provide the described functionality. In some aspects, some functions associated with the circuitry may be implemented by, one or more software or firmware modules. In some aspects, circuitry may include logic, at least partially operable in hardware.

The term "logic" may refer, for example, to computing logic embedded in circuitry of a computing apparatus and/or computing logic stored in a memory of a computing apparatus. For example, the logic may be accessible by a processor of the computing apparatus to execute the computing logic to perform computing functions and/or operations. In one example, logic may be embedded in various types of memory and/or firmware, e.g., silicon blocks of various chips and/or processors. Logic may be included in, and/or implemented as part of, various circuitry, e.g. radio circuitry, receiver circuitry, control circuitry, transmitter circuitry, transceiver circuitry, processor circuitry, and/or the like. In one example, logic may be embedded in volatile memory and/or non-volatile memory, including random access memory, read only memory, programmable memory, magnetic memory, flash memory, persistent memory, and the like. Logic may be executed by one or more processors using memory, e.g., registers, stuck, buffers, and/or the like, coupled to the one or more processors, e.g., as necessary to execute the logic.

Some demonstrative aspects may be used in conjunction with a WLAN, e.g., a WiFi network. Other aspects may be used in conjunction with any other suitable wireless communication network, for example, a wireless area network, a "piconet", a WPAN, a WVAN and the like.

Some demonstrative aspects may be used in conjunction with a wireless communication network communicating over a sub-10 Gigahertz (GHz) frequency band, for example, a 2.4GHz frequency band, a 5GHz frequency band, a 6GHz frequency band, and/or any other frequency band below 10GHz.

Some demonstrative aspects may be used in conjunction with a wireless communication network communicating over an Extremely High Frequency (EHF) band (also referred to as the "millimeter wave (mmWave)" frequency band), for example, a frequency band within the frequency band of between 20Ghz and 300GHz, for example, a frequency band above 45GHz, e.g., a 60GHz frequency band, and/or any other mmWave frequency band. Some demonstrative aspects may be used in conjunction with a wireless communication network communicating over the sub-10 GHz frequency band and/or the mmWave frequency band, e.g., as described below. However, other aspects may be implemented utilizing any other suitable wireless communication frequency bands, for example, a 5G frequency band, a frequency band below 20GHz, a Sub 1 GHz (S1G) band, a WLAN frequency band, a WPAN frequency band, and the like.

Some demonstrative aspects may be implemented by an mmWave STA (mSTA), which may include for example, a STA having a radio transmitter, which is capable of operating on a channel that is within the mmWave frequency band. In one example, mmWave communications may involve one or more directional links to communicate at a rate of multiple gigabits per second, for example, at least 1 Gigabit per second, e.g., at least 7 Gigabit per second, at least 30 Gigabit per second, or any other rate.

In some demonstrative aspects, the mmWave STA may include a Directional Multi-Gigabit (DMG) STA, which may be configured to communicate over a DMG frequency band. For example, the DMG band may include a frequency band wherein the channel starting frequency is above 45 GHz.

In some demonstrative aspects, the mmWave STA may include an Enhanced DMG (EDMG) STA, which may be configured to implement one or more mechanisms, which may be configured to enable Single User (SU) and/or Multi-User (MU) communication of Downlink (DL) and/or Uplink frames (UL) using a MIMO scheme. For example, the EDMG STA may be configured to implement one or more channel bonding mechanisms, which may, for example, support communication over a channel bandwidth (BW) (also referred to as a "wide channel", an "EDMG channel", or a "bonded channel") including two or more channels, e.g., two or more 2.16 GHz channels. For example, the channel bonding mechanisms may include, for example, a mechanism and/or an operation whereby two or more channels, e.g., 2.16 GHz channels, can be combined, e.g., for a higher bandwidth of packet transmission, for example, to enable achieving higher data rates, e.g., when compared to transmissions over a single channel. Some demonstrative aspects are described herein with respect to communication over a channel BW including two or more 2.16 GHz channels, however other aspects may be implemented with respect to communications over a channel bandwidth, e.g., a "wide" channel, including or formed by any other number of two or more channels, for example, an aggregated channel including an aggregation of two or more channels. For example, the EDMG STA may be configured to implement one or more channel bonding mechanisms, which may, for example, support an increased channel bandwidth, for example, a channel BW of 4.32 GHz, a channel BW of 6.48 GHz, a channel BW of 8.64 GHz, and/or any other additional or alternative channel BW. The EDMG STA may perform other additional or alternative functionality.

In other aspects, the mmWave STA may include any other type of STA and/or may perform other additional or alternative functionality. Other aspects may be implemented by any other apparatus, device and/or station.

The term "antenna", as used herein, may include any suitable configuration, structure and/or arrangement of one or more antenna elements, components, units, assemblies and/or arrays. In some aspects, the antenna may implement transmit and receive functionalities using separate transmit and receive antenna elements. In some aspects, the antenna may implement transmit and receive functionalities using common and/or integrated transmit/receive elements. The antenna may include, for example, a phased array antenna, a single element antenna, a set of switched beam antennas, and/or the like.

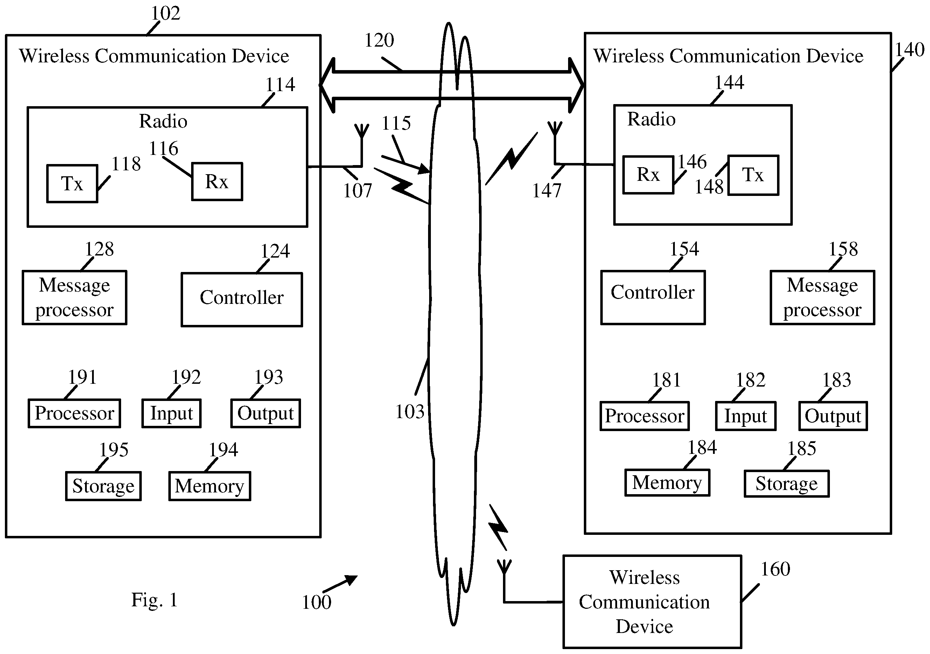

Reference is made to Fig. 1, which schematically illustrates a system 100, in accordance with some demonstrative aspects.

As shown in Fig. 1, in some demonstrative aspects, system 100 may include one or more wireless communication devices. For example, system 100 may include a wireless communication device 102, a wireless communication device 140, a wireless communication device 160, and/or one more other devices.

In some demonstrative aspects, devices 102, 140, and/or 160 may include a mobile device or a non-mobile, e.g., a static, device.

For example, devices 102, 140, and/or 160 may include, for example, a UE, an MD, a STA, an AP, a PC, a desktop computer, a mobile computer, a laptop computer, an Ultrabook^{™} computer, a notebook computer, a tablet computer, a server computer, a handheld computer, an Internet of Things (IoT) device, a sensor device, a handheld device, a wearable device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "Carry Small Live Large" (CSLL) device, an Ultra Mobile Device (UMD), an Ultra Mobile PC (UMPC), a Mobile Internet Device (MID), an "Origami" device or computing device, a device that supports Dynamically Composable Computing (DCC), a context-aware device, a video device, an audio device, an A/V device, a Set-Top-Box (STB), a Blu-ray disc (BD) player, a BD recorder, a Digital Video Disc (DVD) player, a High Definition (HD) DVD player, a DVD recorder, a HD DVD recorder, a Personal Video Recorder (PVR), a broadcast HD receiver, a video source, an audio source, a video sink, an audio sink, a stereo tuner, a broadcast radio receiver, a flat panel display, a Personal Media Player (PMP), a digital video camera (DVC), a digital audio player, a speaker, an audio receiver, an audio amplifier, a gaming device, a data source, a data sink, a Digital Still camera (DSC), a media player, a Smartphone, a television, a music player or the like.

In some demonstrative aspects, device 102 may include, for example, one or more of a processor 191, an input unit 192, an output unit 193, a memory unit 194, and/or a storage unit 195; and/or device 140 may include, for example, one or more of a processor 181, an input unit 182, an output unit 183, a memory unit 184, and/or a storage unit 185. Devices 102 and/or 140 may optionally include other suitable hardware components and/or software components. In some demonstrative aspects, some or all of the components of one or more of devices 102 and/or 140 may be enclosed in a common housing or packaging, and may be interconnected or operably associated using one or more wired or wireless links. In other aspects, components of one or more of devices 102 and/or 140 may be distributed among multiple or separate devices.

In some demonstrative aspects, processor 191 and/or processor 181 may include, for example, a Central Processing Unit (CPU), a Digital Signal Processor (DSP), one or more processor cores, a single-core processor, a dual-core processor, a multiple-core processor, a microprocessor, a host processor, a controller, a plurality of processors or controllers, a chip, a microchip, one or more circuits, circuitry, a logic unit, an Integrated Circuit (IC), an Application-Specific IC (ASIC), or any other suitable multi-purpose or specific processor or controller. Processor 191 may execute instructions, for example, of an Operating System (OS) of device 102 and/or of one or more suitable applications. Processor 181 may execute instructions, for example, of an Operating System (OS) of device 140 and/or of one or more suitable applications.

In some demonstrative aspects, input unit 192 and/or input unit 182 may include, for example, a keyboard, a keypad, a mouse, a touch-screen, a touch-pad, a track-ball, a stylus, a microphone, or other suitable pointing device or input device. Output unit 193 and/or output unit 183 may include, for example, a monitor, a screen, a touch-screen, a flat panel display, a Light Emitting Diode (LED) display unit, a Liquid Crystal Display (LCD) display unit, a plasma display unit, one or more audio speakers or earphones, or other suitable output devices.

In some demonstrative aspects, memory unit 194 and/or memory unit 184 includes, for example, a Random Access Memory (RAM), a Read Only Memory (ROM), a Dynamic RAM (DRAM), a Synchronous DRAM (SD-RAM), a flash memory, a volatile memory, a non-volatile memory, a cache memory, a buffer, a short term memory unit, a long term memory unit, or other suitable memory units. Storage unit 195 and/or storage unit 185 may include, for example, a hard disk drive, a disk drive, a solid-state drive (SSD), and/or other suitable removable or non-removable storage units. Memory unit 194 and/or storage unit 195, for example, may store data processed by device 102. Memory unit 184 and/or storage unit 185, for example, may store data processed by device 140.

In some demonstrative aspects, wireless communication devices 102, 140, and/or 160 may be capable of communicating content, data, information and/or signals via a wireless medium (WM) 103. In some demonstrative aspects, wireless medium 103 may include, for example, a radio channel, an RF channel, a WiFi channel, a cellular channel, a 5G channel, an IR channel, a Bluetooth (BT) channel, a Global Navigation Satellite System (GNSS) Channel, and the like.

In some demonstrative aspects, WM 103 may include one or more wireless communication frequency bands and/or channels. For example, WM 103 may include one or more channels in a sub-10Ghz wireless communication frequency band, for example, a 2.4GHz wireless communication frequency band, one or more channels in a 5GHz wireless communication frequency band, and/or one or more channels in a 6GHz wireless communication frequency band. In another example, WM 103 may additionally or alternatively include one or more channels in an mmWave wireless communication frequency band. In other aspects, WM 103 may include any other type of channel over any other frequency band.

In some demonstrative aspects, device 102, device 140, and/or device 160 may include one or more radios including circuitry and/or logic to perform wireless communication between devices 102, 140, 160, and/or one or more other wireless communication devices. For example, device 102 may include one or more radios 114, and/or device 140 may include one or more radios 144.

In some demonstrative aspects, radios 114 and/or radios 144 may include one or more wireless receivers (Rx) including circuitry and/or logic to receive wireless communication signals, RF signals, frames, blocks, transmission streams, packets, messages, data items, and/or data. For example, a radio 114 may include at least one receiver 116, and/or a radio 144 may include at least one receiver 146.

In some demonstrative aspects, radios 114 and/or 144 may include one or more wireless transmitters (Tx) including circuitry and/or logic to transmit wireless communication signals, RF signals, frames, blocks, transmission streams, packets, messages, data items, and/or data. For example, a radio 114 may include at least one transmitter 118, and/or a radio 144 may include at least one transmitter 148.

In some demonstrative aspects, radios 114 and/or 144, transmitters 118 and/or 148, and/or receivers 116 and/or 146 may include circuitry; logic; Radio Frequency (RF) elements, circuitry and/or logic; baseband elements, circuitry and/or logic; modulation elements, circuitry and/or logic; demodulation elements, circuitry and/or logic; amplifiers; analog to digital and/or digital to analog converters; filters; and/or the like. For example, radios 114 and/or 144 may include or may be implemented as part of a wireless Network Interface Card (NIC), and the like.

In some demonstrative aspects, radios 114 and/or 144 may be configured to communicate over a 2.4GHz band, a 5GHz band, a 6GHz band, and/or any other band, for example, a directional band, e.g., an mmWave band, a 5G band, an S1G band, and/or any other band.

In some demonstrative aspects, radios 114 and/or 144 may include, or may be associated with one or more antennas.

In some demonstrative aspects, device 102 may include one or more antennas 107, and/or device 140 may include on or more antennas 147.

Antennas 107 and/or 147 may include any type of antennas suitable for transmitting and/or receiving wireless communication signals, blocks, frames, transmission streams, packets, messages and/or data. For example, antennas 107 and/or 147 may include any suitable configuration, structure and/or arrangement of one or more antenna elements, components, units, assemblies and/or arrays. In some aspects, antennas 107 and/or 147 may implement transmit and receive functionalities using separate transmit and receive antenna elements. In some aspects, antennas 107 and/or 147 may implement transmit and receive functionalities using common and/or integrated transmit/receive elements.

In some demonstrative aspects, device 102 may include a controller 124, and/or device 140 may include a controller 154. Controller 124 may be configured to perform and/or to trigger, cause, instruct and/or control device 102 to perform, one or more communications, to generate and/or communicate one or more messages and/or transmissions, and/or to perform one or more functionalities, operations and/or procedures between devices 102, 140, 160 and/or one or more other devices; and/or controller 154 may be configured to perform, and/or to trigger, cause, instruct and/or control device 140 to perform, one or more communications, to generate and/or communicate one or more messages and/or transmissions, and/or to perform one or more functionalities, operations and/or procedures between devices 102, 140, 160 and/or one or more other devices, e.g., as described below.

In some demonstrative aspects, controllers 124 and/or 154 may include, or may be implemented, partially or entirely, by circuitry and/or logic, e.g., one or more processors including circuitry and/or logic, memory circuitry and/or logic, Media-Access Control (MAC) circuitry and/or logic, Physical Layer (PHY) circuitry and/or logic, baseband (BB) circuitry and/or logic, a BB processor, a BB memory, Application Processor (AP) circuitry and/or logic, an AP processor, an AP memory, and/or any other circuitry and/or logic, configured to perform the functionality of controllers 124 and/or 154, respectively. Additionally or alternatively, one or more functionalities of controllers 124 and/or 154 may be implemented by logic, which may be executed by a machine and/or one or more processors, e.g., as described below.

In one example, controller 124 may include circuitry and/or logic, for example, one or more processors including circuitry and/or logic, to cause, trigger and/or control a wireless device, e.g., device 102, and/or a wireless station, e.g., a wireless STA implemented by device 102, to perform one or more operations, communications and/or functionalities, e.g., as described herein. In one example, controller 124 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In one example, controller 154 may include circuitry and/or logic, for example, one or more processors including circuitry and/or logic, to cause, trigger and/or control a wireless device, e.g., device 140, and/or a wireless station, e.g., a wireless STA implemented by device 140, to perform one or more operations, communications and/or functionalities, e.g., as described herein. In one example, controller 154 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In some demonstrative aspects, at least part of the functionality of controller 124 may be implemented as part of one or more elements of radio 114, and/or at least part of the functionality of controller 154 may be implemented as part of one or more elements of radio 144.

In other aspects, the functionality of controller 124 may be implemented as part of any other element of device 102, and/or the functionality of controller 154 may be implemented as part of any other element of device 140.

In some demonstrative aspects, device 102 may include a message processor 128 configured to generate, process and/or access one or messages communicated by device 102.

In one example, message processor 128 may be configured to generate one or more messages to be transmitted by device 102, and/or message processor 128 may be configured to access and/or to process one or more messages received by device 102, e.g., as described below.

In one example, message processor 128 may include at least one first component configured to generate a message, for example, in the form of a frame, field, information element and/or protocol data unit, for example, a MAC Protocol Data Unit (MPDU); at least one second component configured to convert the message into a PHY Protocol Data Unit (PPDU), for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 128 may be configured to perform any other additional or alternative functionality and/or may include any other additional or alternative components to generate and/or process a message to be transmitted.

In some demonstrative aspects, device 140 may include a message processor 158 configured to generate, process and/or access one or more messages communicated by device 140.

In one example, message processor 158 may be configured to generate one or more messages to be transmitted by device 140, and/or message processor 158 may be configured to access and/or to process one or more messages received by device 140, e.g., as described below.

In one example, message processor 158 may include at least one first component configured to generate a message, for example, in the form of a frame, field, information element and/or protocol data unit, for example, an MPDU; at least one second component configured to convert the message into a PPDU, for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 158 may be configured to perform any other additional or alternative functionality and/or may include any other additional or alternative components to generate and/or process a message to be transmitted.

In some demonstrative aspects, message processors 128 and/or 158 may include, or may be implemented, partially or entirely, by circuitry and/or logic, e.g., one or more processors including circuitry and/or logic, memory circuitry and/or logic, MAC circuitry and/or logic, PHY circuitry and/or logic, BB circuitry and/or logic, a BB processor, a BB memory, AP circuitry and/or logic, an AP processor, an AP memory, and/or any other circuitry and/or logic, configured to perform the functionality of message processors 128 and/or 158, respectively. Additionally or alternatively, one or more functionalities of message processors 128 and/or 158 may be implemented by logic, which may be executed by a machine and/or one or more processors, e.g., as described below.

In some demonstrative aspects, at least part of the functionality of message processor 128 may be implemented as part of radio 114, and/or at least part of the functionality of message processor 158 may be implemented as part of radio 144.

In some demonstrative aspects, at least part of the functionality of message processor 128 may be implemented as part of controller 124, and/or at least part of the functionality of message processor 158 may be implemented as part of controller 154.

In other aspects, the functionality of message processor 128 may be implemented as part of any other element of device 102, and/or the functionality of message processor 158 may be implemented as part of any other element of device 140.

In some demonstrative aspects, at least part of the functionality of controller 124 and/or message processor 128 may be implemented by an integrated circuit, for example, a chip, e.g., a System on Chip (SoC). In one example, the chip or SoC may be configured to perform one or more functionalities of one or more radios 114. For example, the chip or SoC may include one or more elements of controller 124, one or more elements of message processor 128, and/or one or more elements of one or more radios 114. In one example, controller 124, message processor 128, and one or more radios 114 may be implemented as part of the chip or SoC.

In other aspects, controller 124, message processor 128 and/or one or more radios 114 may be implemented by one or more additional or alternative elements of device 102.

In some demonstrative aspects, at least part of the functionality of controller 154 and/or message processor 158 may be implemented by an integrated circuit, for example, a chip, e.g., a SoC. In one example, the chip or SoC may be configured to perform one or more functionalities of one or more radios 144. For example, the chip or SoC may include one or more elements of controller 154, one or more elements of message processor 158, and/or one or more elements of one or more radios 144. In one example, controller 154, message processor 158, and one or more radios 144 may be implemented as part of the chip or SoC.

In other aspects, controller 154, message processor 158 and/or one or more radios 144 may be implemented by one or more additional or alternative elements of device 140.

In some demonstrative aspects, device 102, device 140, and/or device 160 may include, operate as, perform the role of, and/or perform one or more functionalities of, one or more STAs. For example, device 102 may include at least one STA, device 140 may include at least one STA, and/or device 160 may include at least one STA.

In some demonstrative aspects, device 102, device 140, and/or device 160 may include, operate as, perform the role of, and/or perform one or more functionalities of, one or more Extremely High Throughput (EHT) STAs. For example, device 102 may include, operate as, perform the role of, and/or perform one or more functionalities of, one or more EHT STAs, and/or device 140 may include, operate as, perform the role of, and/or perform one or more functionalities of, one or more EHT STAs.

In some demonstrative aspects, for example, device 102, device 140, and/or device 160 may be configured to perform one or more operations, and/or functionalities of a WiFi 8 STA.

In other aspects, for example, devices 102, 140 and/or 160 may be configured to perform one or more operations, and/or functionalities of an Ultra High Reliability (UHR) STA.

In other aspects, for example, devices 102, 140, and/or 160 may be configured to perform one or more operations, and/or functionalities of any other additional or alternative type of STA.

In other aspects, device 102, device 140, and/or device 160 may include, operate as, perform the role of, and/or perform one or more functionalities of, any other wireless device and/or station, e.g., a WLAN STA, a WiFi STA, and the like.

In some demonstrative aspects, device 102, device 140, and/or device 160 may be configured operate as, perform the role of, and/or perform one or more functionalities of, an Access Point (AP), e.g., a High Throughput (HT) AP STA, a High Efficiency (HE) AP STA, an EHT AP STA and/or a UHR AP STA.

In some demonstrative aspects, device 102, device 140, and/or device 160 may be configured to operate as, perform the role of, and/or perform one or more functionalities of, a non-AP STA, e.g., an HT non-AP STA, an HE non-AP STA, an EHT non-AP STA and/or a UHR non-AP STA.

In other aspects, device 102, device 140, and/or device 160 may operate as, perform the role of, and/or perform one or more functionalities of, any other additional or alternative device and/or station.

In one example, a station (STA) may include a logical entity that is a singly addressable instance of a medium access control (MAC) and physical layer (PHY) interface to the wireless medium (WM). The STA may perform any other additional or alternative functionality.

In one example, an AP may include an entity that contains one station (STA) and provides access to the distribution services, via the wireless medium (WM) for associated STAs. An AP may include a STA and a distribution system access function (DSAF). The AP may perform any other additional or alternative functionality.

In some demonstrative aspects devices 102, 140, and/or 160 may be configured to communicate in an HT network, an HE network, an EHT network, a UHR network, and/or any other network.

In some demonstrative aspects, devices 102, 140 and/or 160 may be configured to operate in accordance with one or more Specifications, for example, including one or more *IEEE 802.11 Specifications,* e.g., an *IEEE 802.11-2020 Specification,* and/or any other specification and/or protocol.

In some demonstrative aspects, device 102, and/or device 140 may include, operate as, perform a role of, and/or perform the functionality of, one or more AP STAs. For example, device 102 may include, operate as, perform a role of, and/or perform the functionality of, at least one AP STA, and/or device 140 may include, operate as, perform a role of, and/or perform the functionality of, at least one AP STA.

In some demonstrative aspects, device 102 may include, operate as, perform a role of, and/or perform the functionality of, a first AP STA.

In some demonstrative aspects, device 140 may include, operate as, perform a role of, and/or perform the functionality of, a second AP STA.

In some demonstrative aspects, device 160 may include, operate as, perform a role of, and/or perform the functionality of, at least one non-AP STA.

In other aspects, device 102, device 140, and/or device 160 may include, operate as, perform a role of, and/or perform the functionality of any other additional or alternative type of STA.

In some demonstrative aspects, device 102, device 140, and/or device 160 may be configured to implement one or more operations and/or functionalities of a joint-transmission mechanism to transmit a joint-transmission, e.g., as described below.

In some demonstrative aspects, the joint-transmission may include transmission of data, e.g., substantially the same data, for example, in the form of a joint processing PHY Protocol Data Unit (PPDU), which may be jointly transmitted, e.g., substantially simultaneously, from two or more APs, for example, two or more non-collocated APs, e.g., as described below.

In some demonstrative aspects, the joint-transmission may be transmitted from the two or more APs, e.g., two or more non-collocated APs, to at least one STA, e.g., as described below.

In some demonstrative aspects, the joint-transmission may be transmitted by joint beamforming from two or more APs to the at least one, e.g., as described below.

In some demonstrative aspects, the joint-transmission may be transmitted from the two or more APs, e.g., two or more non-collocated APs, to a single STA, for example, as a SU joint-transmission, e.g., as described below.

For example, the SU j oint-transmission may include a joint MIMO DL transmission from the two or more APs to the single STA.

In some demonstrative aspects, the joint-transmission may be transmitted from the two or more APs, e.g., two or more non-collocated APs, to a plurality of STAs, for example, as a MU joint-transmission, e.g., as described below.

For example, the MU j oint-transmission may include a joint MU-MIMO DL transmission from the two or more APs to the plurality of STAs.

In some demonstrative aspects, the joint-transmission may be transmitted by configuring a joint beamforming, for example, while considering a combination of antennas of the two or more APs, e.g., as described below.

For example, a joint-transmission from at least first and second APs may be transmitted by configuring a joint beamforming while considering some or all antennas of the first AP and some or all antennas of the second AP.

In one example, the first AP may have four antennas, and the second AP may have four antennas. According to this example, the joint transmission may be performed by joint beamforming, which may be calculated over up to 8 available antennas across the first AP and the second AP, e.g., *4*+*4***=***8.*

In some demonstrative aspects, device 102, device 140, and/or device 160 may be configured to implement one or more operations and/or functionalities of a joint-transmission mechanism, which may be configured to provide a technical solution, e.g., to achieve gains, for example, while addressing one or more challenges, e.g., as described below.

For example, errors in a joint transmission may lead to performance degradation over a single link.

In one example, an efficient implementation of a joint transmission may be based on a relatively tight synchronization between the APs participating in the joint transmission.

In another example, an efficient implementation of a joint transmission may be based on efficiently collecting channel feedback from appropriate APs and/or STAs, and/or ensuring distribution to the two or more APs of correct beamforming pre-coding matrices.

In some demonstrative aspects, device 102, device 140, and/or device 160 may be configured to implement one or more operations and/or functionalities of a joint-transmission mechanism, which may be configured to provide a technical solution to address one or more MAC aspects of the joint transmission, e.g., as described below.

In some demonstrative aspects, the joint-transmission mechanism may be configured to provide a technical solution, which may define one more MAC aspects of a joint transmission, e.g., as described below.

In some demonstrative aspects, the joint transmission mechanism may be configured to provide a technical solution to address availability of MAC frames, e.g., MAC Service Data Units (MSDUs), for example, in buffers of APs participating in the joint transmission, e.g., as described below.

In some demonstrative aspects, the joint transmission mechanism may be configured to provide a technical solution to support correct and/or efficient identification of which one or more packets are to be sent by the APs participating in a joint transmission, e.g., as described below.

In some demonstrative aspects, the joint transmission mechanism may be configured to define a primary AP and one or more secondary APs for a joint transmission to a non-AP STA, e.g., as described below.

In one example, an AP implemented by device 102 may perform the role of the primary AP, and an AP implemented by device 140 may perform the role of the secondary AP, for a joint transmission a non AP STA implanted by device 160, e.g., as described below.

In another example, an AP implemented by device 140 may perform the role of the primary AP, and an AP implemented by device 102 may perform the role of the secondary AP, for a joint transmission a non AP STA implanted by device 160, e.g., as described below.

In some demonstrative aspects, the joint transmission mechanism may be configured to define that the one or more non-AP STAs, which are to receive a DL joint transmission, may include non-AP STAs, which are associated only to the primary AP, e.g., as described below.

In one example, the joint transmission mechanism may define a minimum requirement that a STA utilizing the joint transmission mechanism, e.g., in the DL, may be associated only to the primary AP. According to this example, the STA may utilize existing frame exchanges with the primary AP, e.g., according to one or more normal frame exchange procedures.

Some demonstrative aspects are described below with reference to a joint transmission from two APs to at least one non-AP STA. According to these aspects, one of the two APs may perform the role of the primary AP, and another one of the APs may perform the role of the secondary AP. In other aspects, the joint transmission may be performed from more than two APs. According to these aspects, one of the APs may perform the role of the primary AP, and two or more other APs may perform the role of secondary APs.

In some demonstrative aspects, the joint transmission mechanism may be configured to define that the joint transmission may be performed with a secondary AP, for example, for DL transmissions of data frames belonging to one or more Traffic Identifiers (TIDs), e.g., as described below.

In some demonstrative aspects, a primary AP, e.g., an AP implemented by device 102, and a secondary AP, e.g., an AP implemented by device 140, may be configured to transmit a joint transmission to a non-AP STA, e.g., a non-AP STA implemented by device 160, which may be associated with the primary AP, e.g., as described below.

In some demonstrative aspects, controller 124 may be configured to control, trigger, cause, and/or instruct an AP implemented by device 102 to send a plurality of data packets to a second AP, e.g., an AP implemented by device 140, for example, via a backhaul link 120 between the AP implemented by device 102 and the AP implemented by device 140, e.g., as described below.

In some demonstrative aspects, the plurality of data packets may include a plurality of Medium Access Control (MAC) Service Data Units (MSDUs), e.g., as described below.

In other aspects, the plurality of data packets may include any other type of MAC frames and/or any other type of data packets.

In some demonstrative aspects, controller 124 may be configured to control, trigger, cause, and/or instruct the AP implemented by device 102 to determine a plurality of identified packets from the plurality of data packets for a joint transmission to a non-AP STA, e.g., a non-AP STA implemented by device 160, which may be associated with the AP implemented by device 102, e.g., as described below.

In some demonstrative aspects, controller 124 may be configured to control, trigger, cause, and/or instruct the AP implemented by device 102 to transmit a multi-AP trigger frame 115 to trigger the joint transmission, e.g., as described below.

In some demonstrative aspects, the joint transmission may include transmission of the plurality of identified packets in a first transmission from the AP implemented by device 102 and in a second transmission from the AP implemented by device 140, e.g., as described below.

In some demonstrative aspects, the multi-AP trigger frame 115 may include payload-signaling information configured to signal to the AP implemented by device 140 that a payload of the second transmission is to include the plurality of identified packets, e.g., as described below.

In some demonstrative aspects, controller 124 may be configured to control, trigger, cause, and/or instruct the AP implemented by device 102 to transmit the first transmission, e.g., including the plurality of identified packets, for example, after the multi-AP trigger frame 115, e.g., as described below.

In some demonstrative aspects, controller 124 may be configured to control, trigger, cause, and/or instruct the AP implemented by device 102 to transmit the first transmission, e.g., including the plurality of identified packets, a Short-Inter-Frame-Space (SIFS) after the multi-AP trigger frame 115, e.g., as described below.

In other aspects, the first transmission may be transmitted at any other suitable timing relative to the multi-AP trigger frame 115.

In some demonstrative aspects, the multi-AP trigger frame 115 may be configured to trigger the joint transmission of the identified packets in the first transmission and in a plurality of transmissions from a plurality of APs, respectively, e.g., as described below.

For example, the plurality of APs may include the AP implemented by device 140, e.g., as described below.

In some demonstrative aspects, the multi-AP trigger frame 115 may be configured to trigger the joint transmission of the plurality of identified packets as an MU transmission to a plurality of non-AP STAs, for example, including the non-AP STA implemented by device 160, e.g., as described below.

In some demonstrative aspects, the multi-AP trigger frame 115 may be configured to trigger the joint transmission including a joint-beamforming transmission configured as a beamformed MIMO transmission to be formed by a combination of the first transmission and the second transmission, e.g., as described below.

In some demonstrative aspects, the multi-AP trigger frame 115 may include Physical layer (PHY) precoding information to configure the second transmission, for example, according to a beamforming setting of the beamformed MIMO transmission, e.g., as described below.

In some demonstrative aspects, the multi-AP trigger frame 115 may be configured to trigger the joint transmission including substantially simultaneous transmission of the first transmission and the second transmission, e.g., as described below.

In some demonstrative aspects, the payload-signaling information, e.g., in the multi-AP trigger frame 115, may include Sequence Number (SN) information to indicate an assignment of one or more SNs to one or more respective MAC frames to include the plurality of identified packets, e.g., as described below.

In some demonstrative aspects, the one or more MAC frames may include one or more MPDUs, e.g., as described below.

In some demonstrative aspects, the one or more MAC frames may include one or more Aggregate MAC Service Data Units (A-MSDUs), e.g., as described below.

In other aspects, the one or more MAC frames may include any other type of MAC frames.

In some demonstrative aspects, the SN information may include an SN start value and an SN bitmap, e.g., as described below.

In other aspects, the SN information may include any other additional and/or alternative information.

In some demonstrative aspects, the payload-signaling information, e.g., in the multi-AP trigger frame 115 may include Packet Number (PN) information to indicate an assignment of a plurality of PNs to the plurality of identified packets, e.g., as described below.

In some demonstrative aspects, the PN information may include a PN start value and a PN bitmap, e.g., as described below.

In other aspects, the PN information may include any other additional and/or alternative information.

In some demonstrative aspects, the payload-signaling information, e.g., in the multi-AP trigger frame 115, may include numbering assignment information to indicate a PN assignment for the joint transmission, and/or an SN assignment for the joint transmission, e.g., as described below.

In some demonstrative aspects, the PN assignment for the joint transmission may include an assignment of a plurality of PNs to the plurality of identified packets, respectively, e.g., as described below.

In some demonstrative aspects, the SN assignment for the joint transmission may include an assignment of one or more SNs to one or more MAC frames to include the plurality of identified packets, e.g., as described below.

In some demonstrative aspects, controller 124 may be configured to control, trigger, cause, and/or instruct the AP implemented by device 102 to transmit the first transmission including one or more MAC frames including the plurality of identified packets, e.g., as described below.

In some demonstrative aspects, the one or more MAC frames may be assigned with one or more respective SNs according to the SN assignment, e.g., as described below.

In some demonstrative aspects, the plurality of identified packets may be assigned with a plurality of respective PNs according the PN assignment, e.g., as described below.

In some demonstrative aspects, controller 124 may be configured to control, trigger, cause, and/or instruct the AP implemented by device 102 to send the plurality of data packets in a plurality of MAC frames to the AP implemented by device 140, for example, via the backhaul link 120, e.g., as described below.

In some demonstrative aspects, the plurality of MAC frames may be assigned with a respective plurality of SNs, e.g., as described below.

In some demonstrative aspects, the plurality of data packets may be assigned with a respective plurality of previously-assigned PNs, e.g., as described below.

In some demonstrative aspects, the payload-signaling information, e.g., in the multi-AP trigger frame 115, may include SN information to indicate one or more identified SNs of one or more respective identified MAC frames including the plurality of identified packets, for example, when the plurality of MAC frames sent via the backhaul link 120 is assigned with the plurality of SNs and the plurality of data packets is assigned with the plurality of previously-assigned PNs, e.g., as described below.

In some demonstrative aspects, controller 124 may be configured to control, trigger, cause, and/or instruct the AP implemented by device 102 to send the plurality of data packets assigned with a respective plurality of previously-assigned PNs to the AP implemented by device 140 via the backhaul link 120, e.g., as described below.

In some demonstrative aspects, the payload-signaling information, e.g., in the multi-AP trigger frame 115, may include PN information to indicate a plurality of identified PNs of the plurality of identified packets, e.g., as described below.

In some demonstrative aspects, the payload-signaling information, e.g., in the multi-AP trigger frame 115, may include SN information to indicate an assignment of one or more SNs to one or more respective MAC frames to include the plurality of identified packets, e.g., as described below.

In some demonstrative aspects, controller 124 may be configured to allow the AP implemented by device 102 to determine the assignment of the one or more SNs to the one or more respective MAC frames, for example, after sending the plurality of data packets assigned with the respective plurality of previously-assigned PNs to the AP implemented by device 140, for example, via the backhaul link 120, e.g., as described below.

In some demonstrative aspects, controller 124 may be configured to control, trigger, cause, and/or instruct the AP implemented by device 102 to send the plurality of data packets in a plurality of MAC frames to the AP implemented by device 140 via the backhaul link 120, e.g., as described below.

In some demonstrative aspects, the plurality of MAC frames may be assigned with a respective plurality of SNs, e.g., as described below.

In some demonstrative aspects, the payload-signaling information, e.g., in the multi-AP trigger frame 115, may include SN information to indicate one or more identified SNs of one or more respective identified MAC frames including the plurality of identified packets, e.g., as described below.

In some demonstrative aspects, the payload-signaling information, e.g., in the multi-AP trigger frame 115, may include PN information to indicate an assignment of a plurality of PNs to the plurality of identified packets, respectively, e.g., as described below.

In some demonstrative aspects, controller 124 may be configured to allow the AP implemented by device 102 to determine the assignment of the plurality of PNs to the plurality of identified packets, for example, after sending the plurality of data packets in the plurality of MAC frames to the AP implemented by device 140, for example, via the backhaul link 120, e.g., as described below.

In some demonstrative aspects, the plurality of MAC frames, which are sent via the backhaul link 120, may be assigned with a respective plurality of Dedicated Numbers (DNs), for example, instead of the plurality of SNs, e.g., as described below.

In some demonstrative aspects, the payload-signaling information, e.g., in the multi-AP trigger frame 115, may include DN information to indicate one or more identified DNs of one or more respective identified MAC frames including the plurality of identified packets, e.g., as described below.

In some demonstrative aspects, the payload-signaling information, e.g., in the multi-AP trigger frame 115, may include PN information to indicate an assignment of a plurality of PNs to the plurality of identified packets, respectively, for example, when the plurality of MAC frames is assigned with the respective plurality of DNs, e.g., as described below.

In some demonstrative aspects, the payload-signaling information, e.g., in the multi-AP trigger frame 115, may include SN information to indicate an assignment of one or more SNs to the one or more identified MAC frames, for example, when the plurality of MAC frames is assigned with the respective plurality of DNs, e.g., as described below.

In some demonstrative aspects, controller 124 may be configured to allow the AP implemented by device 102 to determine the assignment of a plurality of PNs to the plurality of identified packets and/or the assignment of the one or more SNs to the one or more identified MAC frames, for example, after sending the plurality of data packets in the plurality of MAC frames to the AP implemented by device 140 via the backhaul link 120, for example, when the plurality of MAC frames is assigned with the respective plurality of DNs, e.g., as described below.

In some demonstrative aspects, controller 124 may be configured to control, trigger, cause, and/or instruct the AP implemented by device 102 to send the plurality of data packets assigned with a respective plurality of DNs to the AP implemented by device 140 via the backhaul link 120, e.g., as described below.

In some demonstrative aspects, the payload-signaling information, e.g., in the multi-AP trigger frame 115, may include DN information to indicate a plurality of identified DNs of the plurality of identified packets, for example, when the plurality of data packets is assigned with the respective plurality of DNs, e.g., as described below.

In some demonstrative aspects, the payload-signaling information, e.g., in the multi-AP trigger frame 115, may include PN information to indicate an assignment of a plurality of PNs to the plurality of identified packets, respectively, for example, when the plurality of data packets is assigned with the respective plurality of DNs, e.g., as described below.

In some demonstrative aspects, the payload-signaling information, e.g., in the multi-AP trigger frame 115, may include SN information to indicate an assignment of one or more SNs to one or more respective MAC frames to include the plurality of identified packets, for example, when the plurality of data packets is assigned with the respective plurality of DNs, e.g., as described below.

In some demonstrative aspects, controller 124 may be configured to allow the AP implemented by device 102 to determine the assignment of the plurality of PNs to the plurality of identified packets and/or the assignment of the one or more SNs to the one or more MAC frames, for example, after sending the plurality of data packets assigned with the plurality of DNs to the AP implemented by device 140 via the backhaul link 120, e.g., as described below.

In some demonstrative aspects, controller 124 may be configured to control, trigger, cause, and/or instruct the AP implemented by device 102 to send the plurality of data packets in a plurality of Aggregated MPDUs (A-MPDUs) to the AP implemented by device 140 via the backhaul link 120, e.g., as described below.

In some demonstrative aspects, the plurality of A-MPDUs may be assigned with a respective plurality of A-MPDU numbers, e.g., as described below.

In some demonstrative aspects, an A-MPDU of the plurality of A-MPDUs may include a plurality of MAC frames assigned with a respective plurality of SNs, e.g., as described below.

In some demonstrative aspects, a MAC frame of the plurality of MAC frames in the A-MPDU may include two or more data packets assigned with two or more respective PNs, e.g., as described below.

In some demonstrative aspects, the payload-signaling information, e.g., in the multi-AP trigger frame 115, may include A-MPDU number information to indicate one or more identified A-MPDUs including the plurality of identified packets, e.g., as described below.

In some demonstrative aspects, the multi-AP trigger frame 115 may include an indication of an oldest MPDU, which may not be allowed to be discarded by the AP implemented by device 140, e.g., as described below.

In some demonstrative aspects, device 140 may receive the plurality of data packets from the AP implemented by device 102, for example, via the backhaul link 120, e.g., as described below.

In some demonstrative aspects, device 140 may receive the multi-AP trigger frame 115 from the AP implemented by device 102 to trigger the joint transmission including the transmission of the plurality of identified packets in the second transmission from the AP implemented by device 140, e.g., as described below.

In some demonstrative aspects, controller 154 may be configured to control, trigger, cause, and/or instruct the AP implemented by device 140 to buffer the plurality of data packets received from the AP implemented by device 102 via the backhaul link 120, e.g., as described below.

In some demonstrative aspects, controller 154 may be configured to control, trigger, cause, and/or instruct the AP implemented by device 140 to process the payload-signaling information in the multi-AP trigger frame 115 from the AP implemented by device 102, for example, to determine a plurality of identified packets from the plurality of data packets for the joint transmission to the non-AP STA implemented by device 160, which may be associated with the AP implemented by device 102, e.g., as described below.

For example, the joint transmission may include the transmission of the plurality of identified packets in the first transmission from the AP implemented by device 102 and in the second transmission from the AP implemented by device 140, e.g., as described below.

In some demonstrative aspects, controller 154 may be configured to control, trigger, cause, and/or instruct the AP implemented by device 140 to transmit the second transmission, for example, after the multi-AP trigger frame 115, e.g., as described below.

In some demonstrative aspects, the second transmission may include the plurality of identified packets, e.g., as described below.

In some demonstrative aspects, controller 154 may be configured to control, trigger, cause, and/or instruct the AP implemented by device 140 to transmit the second transmission a SIFS after the multi-AP trigger frame 115, e.g., as described below.

In other aspects, the second transmission may be transmitted at any other suitable timing relative to the multi-AP trigger frame 115.

In some demonstrative aspects, controller 154 may be configured to control, trigger, cause, and/or instruct the AP implemented by device 140 to configure a beamforming setting of the second transmission based, for example, on the PHY precoding information in the multi-AP trigger frame 115, e.g., as described below.

In some demonstrative aspects, controller 154 may be configured to control, trigger, cause, and/or instruct the AP implemented by device 140 to process the SN information in the payload-signaling information, for example, to identify the assignment of the one or more SNs to one or more respective MAC frames to include the plurality of identified packets, e.g., as described below.

In some demonstrative aspects, the SN information may include the SN start value and/or the SN bitmap, e.g., as described above.

In some demonstrative aspects, controller 154 may be configured to control, trigger, cause, and/or instruct the AP implemented by device 140 to process the PN information in the payload-signaling information, for example, to identify the assignment of the plurality of PNs to the plurality of identified packets, e.g., as described below.

In some demonstrative aspects, the PN information may include the PN start value and/or the PN bitmap, e.g., as described below.

In some demonstrative aspects, controller 154 may be configured to control, trigger, cause, and/or instruct the AP implemented by device 140 to transmit the second transmission including one or more MAC frames including the plurality of identified packets, e.g., as described below.

In some demonstrative aspects, the one or more MAC frames may be assigned with the one or more respective SNs according to the SN assignment, e.g., as described below.

In some demonstrative aspects, the plurality of identified packets may be assigned with the plurality of respective PNs according to the PN assignment, e.g., as described below.

In some demonstrative aspects, controller 154 may be configured to control, trigger, cause, and/or instruct the AP implemented by device 140 to buffer the plurality of data packets in the plurality of MAC frames received from the AP implemented by device 102 via the backhaul link 120, e.g., as described below.

In some demonstrative aspects, the plurality of MAC frames may be assigned with the respective plurality of SNs, e.g., as described below.

In some demonstrative aspects, the plurality of data packets may be assigned with the respective plurality of previously-assigned PNs, e.g., as described below.

In some demonstrative aspects, the payload-signaling information may include the SN information to indicate the one or more identified SNs of one or more respective identified MAC frames including the plurality of identified packets, e.g., as described below.

In some demonstrative aspects, controller 154 may be configured to control, trigger, cause, and/or instruct the AP implemented by device 140 to buffer the plurality of data packets assigned with the respective plurality of previously-assigned PNs received from the AP implemented by device 102 via the backhaul link 120, e.g., as described below.

In some demonstrative aspects, the payload-signaling information may include the PN information to indicate the plurality of identified PNs of the plurality of identified packets, for example, when the plurality of data packets is assigned with the respective plurality of previously-assigned PNs, e.g., as described below.

In some demonstrative aspects, the payload-signaling information may include the SN information to indicate the assignment of one or more SNs to one or more respective MAC frames to include the plurality of identified packets, for example, when the plurality of data packets is assigned with the respective plurality of previously-assigned PNs, e.g., as described below.

In some demonstrative aspects, controller 154 may be configured to control, trigger, cause, and/or instruct the AP implemented by device 140 to buffer the plurality of data packets in the plurality of MAC frames received from the AP implemented by device 102 via the backhaul link 120, e.g., as described below.

In some demonstrative aspects, the plurality of MAC frames may be assigned with the respective plurality of SNs, e.g., as described below.

In some demonstrative aspects, the payload-signaling information may include the SN information to indicate one or more identified SNs of one or more respective identified MAC frames including the plurality of identified packets, e.g., as described below.

In some demonstrative aspects, the payload-signaling information may include the PN information to indicate the assignment of the plurality of PNs to the plurality of identified packets, respectively, e.g., as described below.

In some demonstrative aspects, the plurality of MAC frames may be assigned with the respective plurality of DNs, for example, instead of the plurality of SNs, e.g., as described above.

In some demonstrative aspects, the payload-signaling information may include the DN information to indicate the one or more identified DNs of one or more respective identified MAC frames including the plurality of identified packets, e.g., as described below.

In some demonstrative aspects, the payload-signaling information may include the PN information to indicate the assignment of a plurality of PNs to the plurality of identified packets, respectively, for example, when the plurality of MAC frames is assigned with the respective plurality of DNs, e.g., as described below.

In some demonstrative aspects, the payload-signaling information may include the SN information to indicate the assignment of one or more SNs to the one or more identified MAC frames, for example, when the plurality of MAC frames is assigned with the respective plurality of DNs, e.g., as described below.

In some demonstrative aspects, controller 154 may be configured to control, trigger, cause, and/or instruct the AP implemented by device 140 to buffer the plurality of data packets assigned with the respective plurality of DNs received from the AP implemented by device 102 via the backhaul link 120, e.g., as described below.

In some demonstrative aspects, the payload-signaling information may include DN information to indicate the plurality of identified DNs of the plurality of identified packets, e.g., as described below.

In some demonstrative aspects, the payload-signaling information may include the PN information to indicate the assignment of the plurality of PNs to the plurality of identified packets, respectively, for example, when the plurality of data packets is assigned with the respective plurality of DNs, e.g., as described below.

In some demonstrative aspects, the payload-signaling information may include the SN information to indicate the assignment of one or more SNs to one or more respective MAC frames to include the plurality of identified packets, for example, when the plurality of data packets is assigned with the respective plurality of DNs, e.g., as described below.

In some demonstrative aspects, controller 154 may be configured to control, trigger, cause, and/or instruct the AP implemented by device 140 to buffer the plurality of data packets in the plurality of A-MPDUs received from the AP implemented by device 102 via the backhaul link 120, e.g., as described below.

In some demonstrative aspects, the plurality of A-MPDUs may be assigned with the respective plurality of A-MPDU numbers, e.g., as described below.

In some demonstrative aspects, an A-MPDU of the plurality of A-MPDUs may include the plurality of MAC frames assigned with the respective plurality of SNs, e.g., as described below.

In some demonstrative aspects, a MAC frame of the plurality of MAC frames in the A-MPDU may include the two or more data packets assigned with the two or more respective PNs, e.g., as described below.

In some demonstrative aspects, the payload-signaling information may include the A-MPDU number information to indicate the one or more identified A-MPDUs including the plurality of identified packets, e.g., as described below.

In some demonstrative aspects, controller 154 may be configured to control, trigger, cause, and/or instruct the AP implemented by device 140 to process the multi-AP trigger frame 115 to identify the indication of the oldest MPDU, which is not to be discarded by the AP implemented by device 140, e.g., as described below.

In some demonstrative aspects, device 102, device 140, and/or device 160 may be configured to implement one or more operations and/or functionalities of a joint-transmission mechanism, in which a primary AP, e.g., the AP implemented by device 102, may forward buffered data, e.g., a plurality of data packets, which may belong to a list of TIDs, to one or more secondary AP(s), e.g., including the AP implemented by device 140, for example, via a backhaul link, e.g., the backhaul link 120, e.g., as described below.

In some demonstrative aspects, the plurality of data packets, which may be forwarded to the secondary AP, may already be encrypted and may be assigned with a plurality of PNs, e.g., by the primary AP.

In some demonstrative aspects, the primary AP may also assign an SN to an MPDU including the plurality of data packets, for example, before the MPDU is forwarded to the secondary AP.

In some demonstrative aspects, this joint-transmission mechanism may provide a technical solution to provide a technical advantage, which may require a relatively low level, e.g., a minimum level, of operation from the primary AP and the secondary AP, e.g., as both the PNs and the SN are already assigned prior to sending the data packets via the backhaul link.

In some demonstrative aspects, device 102, device 140, and/or device 160 may be configured to implement one or more operations and/or functionalities of a joint-transmission mechanism, in which the primary AP, e.g., the AP implemented by device 102, may be allowed to not assign the SN to an MPDU including the plurality of data packets, for example, before the MPDU is forwarded to the secondary AP, e.g., the AP implemented by device 140, e.g., as described below.

In some demonstrative aspects, according to this joint-transmission mechanism the secondary AP may assign the SN to the MPDU, for example, right before the joint transmission, e.g., as described below.

In some demonstrative aspects, the primary AP may access a channel and may gain a Transmit Opportunity (TxOP) for a joint transmission.

In some demonstrative aspects, the primary AP may send a multi-AP trigger frame, e.g., the multi-AP trigger frame 115, to the secondary AP.

In some demonstrative aspects, the primary AP may broadcast the multi-AP trigger frame 115 including an indication to identify the secondary AP as a targeted recipient of the multi-AP trigger frame 115.

In some demonstrative aspects, the primary AP may include in the multi-AP trigger frame 115 a list of PNs, which may be configured, for example, to identify the MPDUs, which may be transmitted, e.g., in a PN order, by the secondary AP in a joint transmission, e.g., a joint-processing PPDU, which may follow in a joint processing sequence.

In some demonstrative aspects, the list of PNs may be encoded, for example, with a PN start field, and a PN bitmap field. For example, each bit in the PN bitmap may correspond to a PN value, e.g., starting from a *PN_Start* value.

In some demonstrative aspects, the primary AP may also include in the multi-AP trigger frame 115 a list of SNs assigned to a plurality of MPDUs.

In some demonstrative aspects, the list of SNs may be encoded, for example, with an SN start field, and an SN bitmap field. For example, each bit in the SN bitmap may correspond to an SN value, e.g., starting from an *SN_Start* value.

In some demonstrative aspects, the secondary AP may locate the plurality of MPDUs in its buffers, for example, utilizing the PN numbers.

In some demonstrative aspects, the secondary AP may assign the corresponding SN values to selected MPDUs, e.g., according to a corresponding bit in the SN and bitmaps.

In some demonstrative aspects, the secondary AP may generate an A-MPDU with all the selected MPDUs, for example, based on the list of PNs and the list of SNs in the multi-AP trigger frame 115.

In some demonstrative aspects, it may be defined that the joint processing PPDU is to be transmitted by both APs at a predefined time, e.g., SIFS or any other time period, after the multi-AP trigger frame 115.

In some demonstrative aspects, the primary AP and the secondary AP may transmit the A-MPDU, each with a corresponding PHY processing, e.g., precoding, that corresponds to the PHY joint processing process.

In other aspects, the PPDU may be transmitted later in the sequence.

In some demonstrative aspects, device 102, device 140, and/or device 160 may be configured to implement one or more operations and/or functionalities of a joint-transmission mechanism, in which the primary AP, e.g., the AP implemented by device 102, may be allowed to not assign the PNs to the plurality of data packets before the plurality of data packets is forwarded to the secondary AP, e.g., the AP implemented by device 140, while the primary AP may assign SNs to one or more MPDUs including the plurality of data packets, e.g., as described below.

In some demonstrative aspects, the secondary AP may assign the PNs to the plurality of data packets, for example, right before the joint transmission, e.g., as described below.

In some demonstrative aspects, the primary AP may access the channel and may gain a TxOP for a joint transmission.

In some demonstrative aspects, the primary AP may send a multi-AP trigger frame, e.g., the multi-AP trigger frame 115, to the secondary AP.

In some demonstrative aspects, the primary AP may broadcast the multi-AP trigger frame 115 including an indication to identify the secondary AP as a targeted recipient of the multi-AP trigger frame 115.

In some demonstrative aspects, the primary AP may include in the multi-AP trigger frame 115 a list of SNs, which may be configured, for example, to identify the MPDUs, which may be transmitted, e.g., in an SN order, by the secondary AP in a joint transmission, which may follow in a joint processing sequence.

In some demonstrative aspects, the list of SNs may be encoded, for example, with an SN start field, and an SN bitmap field. For example, each bit in the SN bitmap may correspond to an SN value, e.g., starting from an *SN_Start* value.

In some demonstrative aspects, the primary AP may also include in the multi-AP trigger frame 115 a list of PNs assigned to a plurality of MPDUs.

In some demonstrative aspects, the list of PNs may be encoded, for example, with a PN start field, and a PN bitmap field. For example, each bit in the PN bitmap may correspond to a PN value, e.g., starting from a *PN_Start* value.

In some demonstrative aspects, the secondary AP may locate the plurality of MPDUs in its buffers, for example, utilizing the SN numbers.

In some demonstrative aspects, the secondary AP may assign the corresponding SN values to the selected MPDUs, e.g., according to a corresponding bit in the SN and bitmaps.

In some demonstrative aspects, the secondary AP may generate an A-MPDU with all the selected MPDUs, for example, based on the list of PNs and the list of SNs in the multi-AP trigger frame 115.

In some demonstrative aspects, it may be defined that the joint processing PPDU is to be transmitted by both APs at a predefined time, e.g., SIFS or any other time period, after the multi-AP trigger frame 115.

In some demonstrative aspects, the primary AP and the secondary AP may transmit the A-MPDU, each with a corresponding PHY processing, e.g., precoding, that corresponds to the PHY joint processing process.

In other aspects, the PPDU may be transmitted later in the sequence.

In some demonstrative aspects, device 102, device 140, and/or device 160 may be configured to implement one or more operations and/or functionalities of a joint-transmission mechanism, in which the primary AP, e.g., the AP implemented by device 102, may be allowed to not assign the PNs to the plurality of data packets, and may be allowed to not assign SNs to one or more MPDUs including the plurality of data packets, for example, before the plurality of data packets is forwarded to the secondary AP, e.g., the AP implemented by device 140, e.g., as described below.

In some demonstrative aspects, the primary AP may assign DNs to the MPDUs, and the DNs may be forwarded to the secondary AP along with the MPDUs.

In some demonstrative aspects, the secondary AP may assign the PNs to the plurality of data packets, for example, right before the joint transmission, e.g., as described below.

In some demonstrative aspects, the secondary AP may assign the SNs to the plurality of MPDUs, for example, right before the joint transmission, e.g., as described below.

In some demonstrative aspects, the primary AP may access the channel and may gain a TxOP.

In some demonstrative aspects, the primary AP may send a multi-AP trigger frame, e.g., the multi-AP trigger frame 115, to the secondary AP.

In some demonstrative aspects, the primary AP may broadcast the multi-AP trigger frame 115 including an indication to identify the secondary AP as a targeted recipient of the multi-AP trigger frame 115.

In some demonstrative aspects, the primary AP may include in the multi-AP trigger frame 115 a list of DNs to identify the MPDUs, which may be transmitted, e.g., in a DN order, by the secondary AP, for example, in a joint processing PPDU, which may follow in a joint processing sequence.

In some demonstrative aspects, the list of DNs may be encoded, for example, with a DN start field, and a DN bitmap field. For example, each bit in the DN bitmap may correspond to a DN value, e.g., starting from a *DN_Start* value.

In some demonstrative aspects, the primary AP may include in the multi-AP trigger frame 115 a list of SNs and PNs assigned to the MPDUs.

In some demonstrative aspects, the list of SNs may be encoded, for example, with an SN start field and an SN bitmap field. For example, each bit in the SN bitmap may correspond to an SN value, e.g., starting from an *SN_Start* value.

In some demonstrative aspects, the list of PNs may be encoded, for example, with a PN start field and a PN bitmap field. For example, each bit in the PN bitmap may correspond to a PN value, e.g., starting from a *PN_Start* value.

In some demonstrative aspects, the secondary AP may locate the plurality of MPDUs in its buffers, for example, utilizing the list of DNs.

In some demonstrative aspects, the secondary AP may assign the corresponding SN and/or PN values to the selected MPDUs, e.g., according to a corresponding bit in the SN and/or PN bitmaps, respectively.

In some demonstrative aspects, the secondary AP may generate an A-MPDU with all the selected MPDUs, for example, based on the list of PNs and the list of SNs in the multi-AP trigger frame 115.

In some demonstrative aspects, it may be defined that the joint processing PPDU is to be transmitted by both APs at a predefined time, e.g., SIFS or any other time period, after the multi-AP trigger frame 115.

In some demonstrative aspects, the primary AP and the secondary AP may transmit the A-MPDU, each with a corresponding PHY processing, e.g., precoding, that corresponds to the PHY joint processing process.

In other aspects, the PPDU may be transmitted later in the sequence.

In some demonstrative aspects, device 102, device 140, and/or device 160 may be configured to implement one or more operations and/or functionalities of a joint-transmission mechanism, in which the secondary AP, e.g., the AP implemented by device 140, may be allowed to perform A-MSDU aggregation for the joint transmission, e.g., as described below.

In some demonstrative aspects, the secondary AP may perform the A-MSDU aggregation, for example, between the reception of the multi-AP trigger frame 115 and the transmission of the joint-transmission. For example, the secondary AP may perform the A-MSDU aggregation, for example, right before transmitting the joint transmission.

In some demonstrative aspects, this joint-transmission mechanism may provide a technical solution, which may allow complete flexibility for A-MSDU and/or A-MPDU aggregation.

In some demonstrative aspects, the multi-AP trigger frame 115 may be configured to include information to support performing the A-MSDU aggregation.

In some demonstrative aspects, the multi-AP trigger frame 115 may include the DN numbers assigned to the MSDUs, e.g., instead of to the MPDUs, e.g., as described above. For example, the DN numbers may be assigned to the MSDUs.

In some demonstrative aspects, the multi-AP trigger frame 115 may include the starting DN value of the MSDU, which may be included in the joint transmission, and an A-MSDU size of the A-MSDU, e.g., to indicate a number of consecutive MSDUs, e.g., *(DN*+*1, DN+2, DN+3,* ...*)*, that may form the A-MSDU.

In some demonstrative aspects, the multi-AP trigger frame 115 may include a DN flag to indicate that an A-MSDU construction of the A-MSDU may be regular, and may follow a same pattern, for example, when all the DN values are in order and every A-MSDU size is the same.

In some demonstrative aspects, the multi-AP trigger frame 115 may include different DN ranges for the *DN_values,* for example, if mapping of the A-MSDU is not regular. For example, a DN range, e.g., each DN range, may be defined with a starting DN value, an ending DN value, and/or an A-MSDU size, for example, with *Ending DN* and *Starting DN* being a multiple of the A-MSDU size. The DN ranges may be indicated using any other suitable parameters.

In some demonstrative aspects, the secondary AP may identify the MSDUs with the right DN values, for example, based on the information in the multi-AP trigger frame 115, for example, to aggregate the identified MSDUs into A-MSDUs.

In some demonstrative aspects, the secondary AP may generate and may include the A-MSDUs into an A-MPDU,

In some demonstrative aspects, the secondary AP may transmit the A-MPDU in the joint transmission.

In some demonstrative aspects, device 102, device 140, and/or device 160 may be configured to implement one or more operations and/or functionalities of a joint-transmission mechanism, e.g., a simplified joint-transmission mechanism, in which the primary AP, e.g., the AP implemented by device 102, may transmit formed, e.g., "pre-formed" or "already formed", A-MPDUs, which may include A-MSDUs, to the secondary AP, e.g., the AP implemented by device 140, via the backhaul link 120, e.g., as described below.

In some demonstrative aspects, the formed A-MPDUs may include MPDUs, which may be encrypted and assigned with a PN value and an SN value.

In some demonstrative aspects, the primary AP may send only one A-MPDU at a time, or may send a plurality of A-MPDUs, for example, along with A-MPDU numbers, which may allow to identify the correct A-MPDU.

In some demonstrative aspects, the multi-AP trigger frame 115 may include information regarding a construction of the MAC payload of the A-MPDUs. For example, the multi-AP trigger frame 115 may include the A-MPDU number.

In some demonstrative aspects, the simplified joint-transmission mechanism may provide a technical solution, which may simplify the processing at the secondary AP, e.g., right before transmission of the joint transmission. This solution may possibly have a cost of some flexibility loss.

In some demonstrative aspects, device 102, device 140, and/or device 160 may be configured to implement one or more operations and/or functionalities of a joint-transmission mechanism, in which the primary AP, e.g., the AP implemented by device 102, signals to the secondary AP, e.g., the AP implemented by device 140, an oldest MPDU, which is not to be discarded by the secondary AP, e.g., as described below.

In some demonstrative aspects, the multi-AP trigger frame 115 may include an indication of the oldest MPDU, which may not be discarded by the secondary AP.

In some demonstrative aspects, an *SN_start field,* e.g., in the SN information in the multi-AP trigger frame 115, may indicate a smallest SN value to be kept, for example, in case the plurality of MPDUs are identified with SNs in the SN list. For example, the secondary AP may discard MPDUs having lower SNs than the smallest SN value, for example, from the buffer of the secondary AP.

In some demonstrative aspects, a dedicated field, e.g., a "lowest SN in window" field, may be included, for example, in the SN information. For example, this dedicated field may be configured to indicate the smallest SN value to be kept by the secondary AP, e.g., instead of using the *SN_start* field.

In some demonstrative aspects, one or more buffer window rules, which may be used for a Block Acknowledge (BA) agreement, may be reused, for example, to indicate the oldest MPDU, which may not be discarded by the secondary AP. For example, a buffer size may be defined by the secondary AP and the primary AP to be set to a value of *BufferSize,* and an MPDU may be sent with an *SN1* value. According to this example, MPDUs in the buffer with SN values that are equal to or lower than *SN1-BufferSize* may be discarded, e.g., according to a moving window concept.

In some demonstrative aspects, *a PN start* field, e.g., in the SN information in the multi-AP trigger frame 115, may be configured to indicate a smallest PN value to be kept, for example, in case the plurality of MPDUs are identified with PNs in the PN list. For example, the secondary AP may discard MPDUs having lower PNs than the smallest PN value, for example, from the buffer of the secondary AP.

In some demonstrative aspects, a dedicated field, e.g., a "lowest PN in window" field, may be included, for example, in the PN information. For example, this dedicated field may be configured to indicate the smallest PN value to be kept by the secondary AP, e.g., instead of using the *PN_start* field.

In some demonstrative aspects, one or more buffer window rules, which may be used for a BA agreement, may be reused, for example, to indicate the oldest MPDU, which may not be discarded by the secondary AP. For example, a buffer size may be defined by the secondary AP and the primary AP to be set to a value of *BufferSize,* and an MPDU may be sent with a *PN1* value. According to this example, MPDUs in the buffer with PN values that are equal to or lower than *PN1-BufferSize* may be discarded, e.g., according to a moving window concept.

In some demonstrative aspects, a *DN_start* field, e.g., in the DN information in the multi-AP trigger frame 115, may be configured to indicate a smallest DN value to be kept, for example, in case the plurality of MPDUs are identified with DNs in the DN list. For example, the secondary AP may discard MPDUs having lower DNs than the smallest DN value, for example, from the buffer of the secondary AP.

In some demonstrative aspects, a dedicated field, e.g., a "lowest DN in window" field, may be included, for example, in the DN information. For example, this dedicated field may be configured to indicate the smallest DN value to be kept by the secondary AP, e.g., instead of using the *DN_start* field.

In some demonstrative aspects, one or more buffer window rules, which may be used for a BA agreement, may be reused, for example, to indicate the oldest MPDU, which may not be discarded by the secondary AP. For example, a buffer size may be defined by the secondary AP and the primary AP to be set to a value of *BufferSize,* and an MPDU may be sent with a *DN1* value. According to this example, MPDUs in the buffer with DN values that are equal to or lower than *DN1-BufferSize* may be discarded, e.g., according to a moving window concept.

In some demonstrative aspects, the primary AP, e.g., the AP implemented by device 140, may be configured to signal to the secondary AP, e.g., the AP implemented by device 140, an oldest A-MPDU, which may not be discarded by the secondary AP, for example, by implementing one or more of the methods described above with respect to the MPDUs, e.g., at the A-MPDU level.

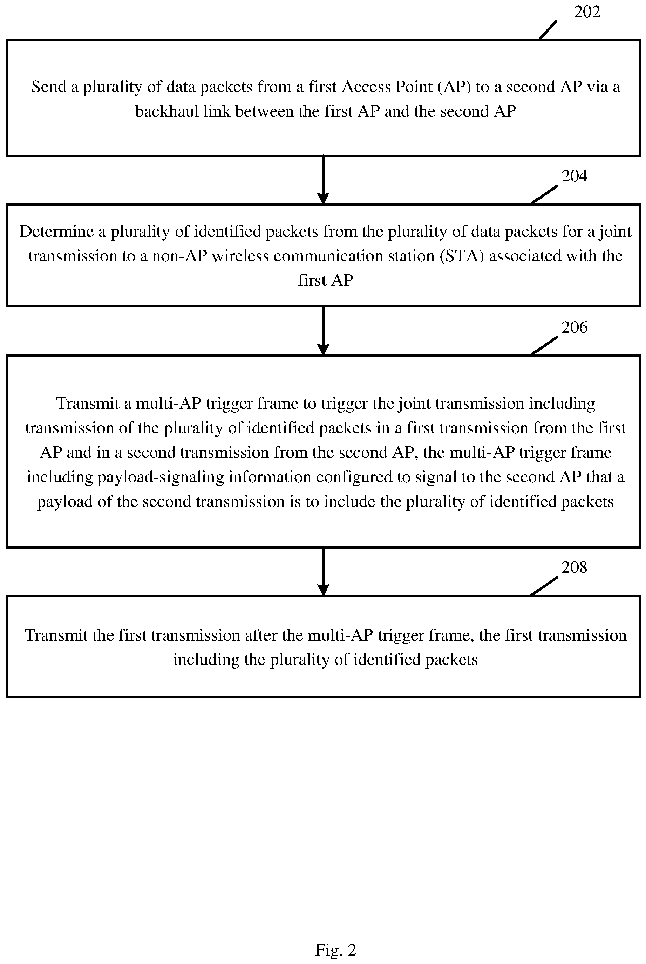

Reference is made to Fig. 2, which schematically illustrates a method of transmitting a joint transmission, in accordance with some demonstrative aspects. For example, one or more of the operations of the method of Fig. 2 may be performed by one or more elements of a system, e.g., system 100 (Fig. 1), for example, one or more wireless devices, e.g., device 102 (Fig. 1), device 140 (Fig. 1), and/or device 160 (Fig. 1), a controller, e.g., controller 124 (Fig. 1) and/or controller 154 (Fig. 1), a radio, e.g., radio 114 (Fig. 1) and/or radio 144 (Fig. 1), and/or a message processor, e.g., message processor 128 (Fig. 1) and/or message processor 158 (Fig. 1).

As indicated at block 202, the method may include sending from a first AP a plurality of data packets to a second AP via a backhaul link between the first AP and the second AP. For example, controller 124 (Fig. 1) may be configured to cause, trigger, and/or control the AP implemented by device 102 (Fig. 1) to send the plurality of data packets to the AP implemented by device 140 (Fig. 1) via the backhaul link 120 (Fig. 1) between device 102 (Fig. 1) and device 140 (Fig. 1), e.g., as described above.

As indicated at block 204, the method may include determining a plurality of identified packets from the plurality of data packets for a joint transmission to a non-AP STA associated with the first AP. For example, controller 124 (Fig. 1) may be configured to cause, trigger, and/or control the AP implemented by device 102 (Fig. 1) to determine the plurality of identified packets from the plurality of data packets for the joint transmission to the non-AP STA implemented by device 160 (Fig. 1) associated with the AP implemented by device 102 (Fig. 1), e.g., as described above.

As indicated at block 206, the method may include transmitting a multi-AP trigger frame to trigger the joint transmission including transmission of the plurality of identified packets in a first transmission from the first AP and in a second transmission from the second AP. For example, the multi-AP trigger frame may include payload-signaling information configured to signal to the second AP that a payload of the second transmission is to include the plurality of identified packets. For example, controller 124 (Fig. 1) may be configured to cause, trigger, and/or control the AP implemented by device 102 (Fig. 1) to transmit the multi-AP trigger frame 115 (Fig. 1) to trigger the joint transmission including the transmission of the plurality of identified packets in the first transmission from the AP implemented by device 102 (Fig. 1) and in the second transmission from the AP implemented by device 140 (Fig. 1), e.g., as described above.

As indicated at block 208, the method may include transmitting the first transmission after the multi-AP trigger frame. For example, the first transmission may include the plurality of identified packets. For example, controller 124 (Fig. 1) may be configured to cause, trigger, and/or control the AP implemented by device 102 (Fig. 1) to transmit the first transmission including the plurality of identified packets after the multi-AP trigger frame 115 (Fig. 1), e.g., as described above.

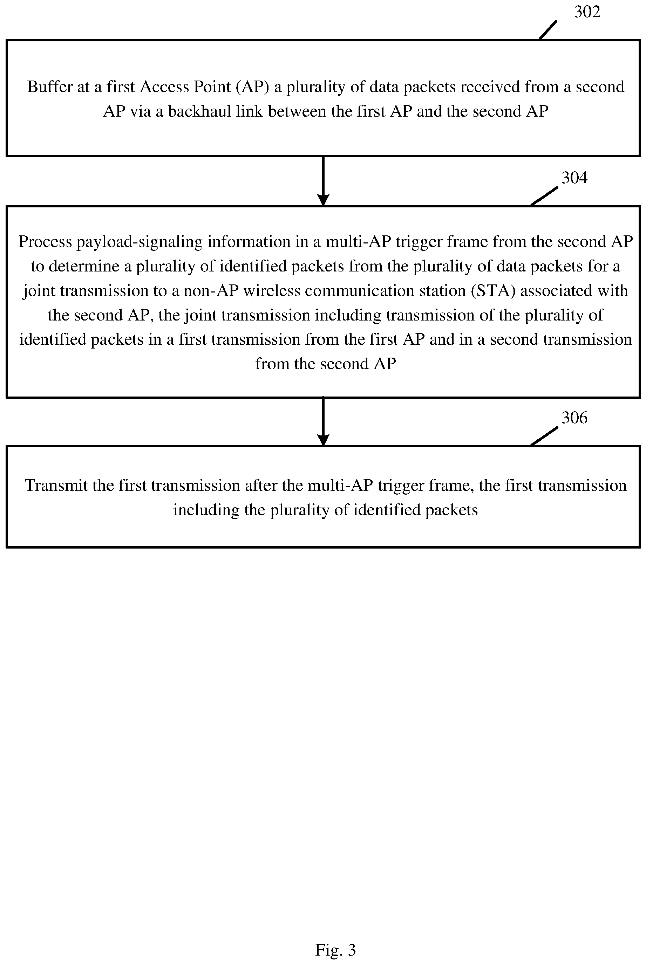

Reference is made to Fig. 3, which schematically illustrates a method of transmitting a joint transmission, in accordance with some demonstrative aspects. For example, one or more of the operations of the method of Fig. 3 may be performed by one or more elements of a system, e.g., system 100 (Fig. 1), for example, one or more wireless devices, e.g., device 102 (Fig. 1), device 140 (Fig. 1), and/or device 160 (Fig. 1), a controller, e.g., controller 124 (Fig. 1) and/or controller 154 (Fig. 1), a radio, e.g., radio 114 (Fig. 1) and/or radio 144 (Fig. 1), and/or a message processor, e.g., message processor 128 (Fig. 1) and/or message processor 158 (Fig. 1).

As indicated at block 302, the method may include buffering at a first AP a plurality of data packets received from a second AP via a backhaul link between the first AP and the second AP. For example, controller 154 (Fig. 1) may be configured to cause, trigger, and/or control the AP implemented by device 140 (Fig. 1) to buffer the plurality of data packets received from the AP implemented by device 102 (Fig. 1) via the backhaul link 120 (Fig. 1) between device 102 (Fig. 1) and device 140 (Fig. 1), e.g., as described above.

As indicated at block 304, the method may include processing payload-signaling information in a multi-AP trigger frame from the second AP to determine a plurality of identified packets from the plurality of data packets for a joint transmission to a non-AP STA associated with the second AP. For example, the joint transmission may include transmission of the plurality of identified packets in a first transmission from the first AP, and in a second transmission from the second AP. For example, controller 154 (Fig. 1) may be configured to cause, trigger, and/or control the AP implemented by device 140 (Fig. 1) to process the payload-signaling information in the multi-AP trigger frame 115 (Fig. 1) from the AP implemented by device 102 (Fig. 1) to determine a plurality of identified packets to be transmitted in the joint transmission, e.g., as described above.

As indicated at block 306, the method may include transmitting the first transmission after the multi-AP trigger frame. For example, the first transmission may include the plurality of identified packets. For example, controller 154 (Fig. 1) may be configured to cause, trigger, and/or control the AP implemented by device 140 (Fig. 1) to transmit the second transmission including the plurality of identified packets after the multi-AP trigger frame 115 (Fig. 1), e.g., as described above.

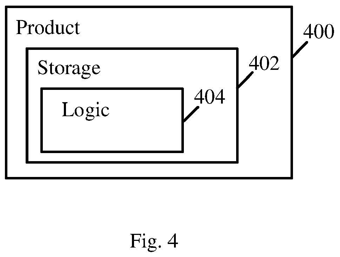

Reference is made to Fig. 4, which schematically illustrates a product of manufacture 400, in accordance with some demonstrative aspects. Product 400 may include one or more tangible computer-readable ("machine-readable") non-transitory storage media 402, which may include computer-executable instructions, e.g., implemented by logic 404, operable to, when executed by at least one computer processor, enable the at least one computer processor to implement one or more operations at device 102 (Fig. 1), device 140 (Fig. 1), device 160 (Fig. 1), controller 124 (Fig. 1), controller 154 (Fig. 1), message processor 128 (Fig. 1), message processor 158 (Fig. 1), radio 114 (Fig. 1), radio 144 (Fig. 1), transmitter 118 (Fig. 1), transmitter 148 (Fig. 1), receiver 116 (Fig. 1), and/or receiver 146 (Fig. 1); to cause device 102 (Fig. 1), device 140 (Fig. 1), device 160 (Fig. 1), controller 124 (Fig. 1), controller 154 (Fig. 1), message processor 128 (Fig. 1), message processor 158 (Fig. 1), radio 114 (Fig. 1), radio 144 (Fig. 1), transmitter 118 (Fig. 1), transmitter 148 (Fig. 1), receiver 116 (Fig. 1), and/or receiver 146 (Fig. 1) to perform, trigger and/or implement one or more operations and/or functionalities; and/or to perform, trigger and/or implement one or more operations and/or functionalities described with reference to the Figs. 1, 2 and 3, and/or one or more operations described herein. The phrases "non-transitory machine-readable medium" and "computer-readable non-transitory storage media" may be directed to include all machine and/or computer readable media, with the sole exception being a transitory propagating signal.

In some demonstrative aspects, product 400 and/or machine readable storage media 402 may include one or more types of computer-readable storage media capable of storing data, including volatile memory, non-volatile memory, removable or non-removable memory, erasable or non-erasable memory, writeable or re-writeable memory, and the like. For example, machine readable storage media 402 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), flash memory (e.g., NOR or NAND flash memory), content addressable memory (CAM), polymer memory, phase-change memory, ferroelectric memory, silicon-oxide-nitride-oxide-silicon (SONOS) memory, a disk, a hard drive, and the like. The computer-readable storage media may include any suitable media involved with downloading or transferring a computer program from a remote computer to a requesting computer carried by data signals embodied in a carrier wave or other propagation medium through a communication link, e.g., a modem, radio or network connection.

In some demonstrative aspects, logic 404 may include instructions, data, and/or code, which, if executed by a machine, may cause the machine to perform a method, process and/or operations as described herein. The machine may include, for example, any suitable processing platform, computing platform, computing device, processing device, computing system, processing system, computer, processor, or the like, and may be implemented using any suitable combination of hardware, software, firmware, and the like.

In some demonstrative aspects, logic 404 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner or syntax, for instructing a processor to perform a certain function. The instructions may be implemented using any suitable high-level, low-level, object-oriented, visual, compiled and/or interpreted programming language, machine code, and the like.

### EXAMPLES

The following examples pertain to further aspects.

Example 1 includes an apparatus comprising logic and circuitry configured to cause a first Access Point (AP) to send a plurality of data packets to a second AP via a backhaul link between the first AP and the second AP; determine a plurality of identified packets from the plurality of data packets for a joint transmission to a non-AP wireless communication station (STA) associated with the first AP; transmit a multi-AP trigger frame to trigger the joint transmission comprising transmission of the plurality of identified packets in a first transmission from the first AP and in a second transmission from the second AP, wherein the multi-AP trigger frame comprises payload-signaling information configured to signal to the second AP that a payload of the second transmission is to include the plurality of identified packets; and transmit the first transmission after the multi-AP trigger frame, wherein the first transmission comprises the plurality of identified packets.

Example 2 includes the subject matter of Example 1, and optionally, wherein the payload-signaling information comprises numbering assignment information to indicate at least one of a Packet Number (PN) assignment for the j oint transmission, or a Sequence Number (SN) assignment for the joint transmission.

Example 3 includes the subject matter of Example 2, and optionally, wherein the PN assignment for the joint transmission comprises an assignment of a plurality of PNs to the plurality of identified packets, respectively.

Example 4 includes the subject matter of Example 2 or 3, and optionally, wherein the SN assignment for the joint transmission comprises an assignment of one or more SNs to one or more Medium Access Control (MAC) frames to include the plurality of identified packets.

Example 5 includes the subject matter of any one of Examples 2-4, and optionally, wherein the apparatus is configured to cause the first AP to transmit the first transmission comprising one or more Medium Access Control (MAC) frames comprising the plurality of identified packets, wherein the one or more MAC frames are assigned with one or more respective SNs according to the SN assignment, wherein the plurality of identified packets are assigned with a plurality of respective PNs according the PN assignment.

Example 6 includes the subject matter of any one of Examples 1-5, and optionally, wherein the apparatus is configured to cause the first AP to send the plurality of data packets in a plurality of Medium Access Control (MAC) frames to the second AP via the backhaul link, wherein the plurality of MAC frames are assigned with a respective plurality of Sequence Numbers (SNs), wherein the plurality of data packets are assigned with a respective plurality of previously-assigned Packet Numbers (PNs), wherein the payload-signaling information comprises SN information to indicate one or more identified SNs of one or more respective identified MAC frames comprising the plurality of identified packets.

Example 7 includes the subject matter of any one of Examples 1-5, and optionally, wherein the apparatus is configured to cause the first AP to send the plurality of data packets assigned with a respective plurality of previously-assigned Packet Numbers (PNs) to the second AP via the backhaul link, wherein the payload-signaling information comprises PN information to indicate a plurality of identified PNs of the plurality of identified packets, wherein the payload-signaling information comprises Sequence Number (SN) information to indicate an assignment of one or more SNs to one or more respective Medium Access Control (MAC) frames to include the plurality of identified packets.

Example 8 includes the subject matter of Example 7, and optionally, wherein the apparatus is configured to allow the first AP to determine the assignment of the one or more SNs to the one or more respective MAC frames after sending the plurality of data packets assigned with the respective plurality of previously-assigned PNs to the second AP via the backhaul link.

Example 9 includes the subject matter of any one of Examples 1-5, and optionally, wherein the apparatus is configured to cause the first AP to send the plurality of data packets in a plurality of Medium Access Control (MAC) frames to the second AP via the backhaul link, wherein the plurality of MAC frames are assigned with a respective plurality of Sequence Numbers (SNs), wherein the payload-signaling information comprises SN information to indicate one or more identified SNs of one or more respective identified MAC frames comprising the plurality of identified packets, wherein the payload-signaling information comprises Packet Number (PN) information to indicate an assignment of a plurality of PNs to the plurality of identified packets, respectively.

Example 10 includes the subject matter of Example 9, and optionally, wherein the apparatus is configured to allow the first AP to determine the assignment of the plurality of PNs to the plurality of identified packets after sending the plurality of data packets in the plurality of MAC frames to the second AP via the backhaul link.

Example 11 includes the subject matter of any one of Examples 1-5, and optionally, wherein the apparatus is configured to cause the first AP to send the plurality of data packets in a plurality of Medium Access Control (MAC) frames to the second AP via the backhaul link, wherein the plurality of MAC frames are assigned with a respective plurality of Dedicated Numbers (DNs), wherein the payload-signaling information comprises DN information to indicate one or more identified DNs of one or more respective identified MAC frames comprising the plurality of identified packets, wherein the payload-signaling information comprises Packet Number (PN) information to indicate an assignment of a plurality of PNs to the plurality of identified packets, respectively, wherein the payload-signaling information comprises Sequence Number (SN) information to indicate an assignment of one or more SNs to the one or more identified MAC frames.

Example 12 includes the subject matter of Example 11, and optionally, wherein the apparatus is configured to allow the first AP to determine the assignment of a plurality of PNs to the plurality of identified packets and the assignment of the one or more SNs to the one or more identified MAC frames after sending the plurality of data packets in the plurality of MAC frames to the second AP via the backhaul link.

Example 13 includes the subject matter of any one of Examples 1-5, and optionally, wherein the apparatus is configured to cause the first AP to send the plurality of data packets assigned with a respective plurality of Dedicated Numbers (DNs) to the second AP via the backhaul link, wherein the payload-signaling information comprises DN information to indicate a plurality of identified DNs of the plurality of identified packets, wherein the payload-signaling information comprises Packet Number (PN) information to indicate an assignment of a plurality of PNs to the plurality of identified packets, respectively, wherein the payload-signaling information comprises Sequence Number (SN) information to indicate an assignment of one or more SNs to one or more respective Medium Access Control (MAC) frames to include the plurality of identified packets.

Example 14 includes the subject matter of Example 13, and optionally, wherein the apparatus is configured to allow the first AP to determine the assignment of the plurality of PNs to the plurality of identified packets and the assignment of the one or more SNs to the one or more MAC frames after sending the plurality of data packets assigned with the plurality of DNs to the second AP via the backhaul link.

Example 15 includes the subject matter of any one of Examples 1-5, and optionally, wherein the apparatus is configured to cause the first AP to send the plurality of data packets in a plurality of Aggregated Medium Access Control (MAC) Protocol Data Units (MPDUs) (A-MPDUs) to the second AP via the backhaul link, wherein the plurality of A-MPDUs are assigned with a respective plurality of A-MPDU numbers, wherein an A-MPDU of the plurality of A-MPDUs comprises a plurality of MAC frames assigned with a respective plurality of Sequence Numbers (SNs), wherein a MAC frame of the plurality of MAC frames in the A-MPDU comprises two or more data packets assigned with two or more respective Packet Numbers (PNs), wherein the payload-signaling information comprises A-MPDU number information to indicate one or more identified A-MPDUs comprising the plurality of identified packets.

Example 16 includes the subject matter of any one of Examples 1-15, and optionally, wherein the payload-signaling information comprises Sequence Number (SN) information to indicate an assignment of one or more SNs to one or more respective Medium Access Control (MAC) frames to include the plurality of identified packets.

Example 17 includes the subject matter of Example 16, and optionally, wherein the SN information comprises an SN start value and an SN bitmap.

Example 18 includes the subject matter of Example 16 or 17, and optionally, wherein the one or more MAC frames comprises one or more MAC Protocol Data Units (MPDUs).

Example 19 includes the subject matter of Example 16 or 17, and optionally, wherein the one or more MAC frames comprises one or more Aggregate MAC Service Data Units (A-MSDUs).

Example 20 includes the subject matter of any one of Examples 1-19, and optionally, wherein the payload-signaling information comprises Packet Number (PN) information to indicate an assignment of a plurality of PNs to the plurality of identified packets.

Example 21 includes the subject matter of Example 20, and optionally, wherein the PN information comprises a PN start value and an PN bitmap.

Example 22 includes the subject matter of any one of Examples 1-21, and optionally, wherein the multi-AP trigger frame comprises an indication of an oldest Medium Access Control (MAC) Protocol Data Unit (MPDU), which is not to be discarded by the second AP.

Example 23 includes the subject matter of any one of Examples 1-22, and optionally, wherein the multi-AP trigger frame is configured to trigger the joint transmission of the plurality of identified packets in the first transmission and in a plurality of transmissions from a plurality of APs, respectively, wherein the plurality of APs comprises the second AP.

Example 24 includes the subject matter of any one of Examples 1-23, and optionally, wherein the multi-AP trigger frame is configured to trigger the joint transmission of the plurality of identified packets as a Multi-User (MU) transmission to a plurality of non-AP STAs comprising the non-AP STA.

Example 25 includes the subject matter of any one of Examples 1-24, and optionally, wherein the multi-AP trigger frame is configured to trigger the joint transmission comprising a joint-beamforming transmission configured as a beamformed Multiple-Input-Multiple-Output (MIMO) transmission to be formed by a combination of the first transmission and the second transmission.

Example 26 includes the subject matter of Example 25, and optionally, wherein the multi-AP trigger frame comprises Physical layer (PHY) precoding information to configure the second transmission according to a beamforming setting of the beamformed MIMO transmission.

Example 27 includes the subject matter of any one of Examples 1-26, and optionally, wherein the multi-AP trigger frame is configured to trigger the joint transmission comprising substantially simultaneous transmission of the first transmission and the second transmission.

Example 28 includes the subject matter of any one of Examples 1-27, and optionally, wherein the apparatus is configured to cause the first AP to transmit the first transmission a Short-Inter-Frame-Space (SIFS) after the multi-AP trigger frame.

Example 29 includes the subject matter of any one of Examples 1-28, and optionally, wherein the plurality of data packets comprises a plurality of Medium Access Control (MAC) Service Data Units (MSDUs).

Example 30 includes the subject matter of any one of Examples 1-29, and optionally, comprising at least one radio to transmit the multi-AP trigger frame and the first transmission.

Example 31 includes the subject matter of Example 30, and optionally, comprising one or more antennas connected to the radio, and a processor to execute instructions of an operating system.

Example 32 includes an apparatus comprising logic and circuitry configured to cause a first Access Point (AP) to buffer a plurality of data packets received from a second AP via a backhaul link between the first AP and the second AP; process payload-signaling information in a multi-AP trigger frame from the second AP to determine a plurality of identified packets from the plurality of data packets for a joint transmission to a non-AP wireless communication station (STA) associated with the second AP, the joint transmission comprising transmission of the plurality of identified packets in a first transmission from the first AP and in a second transmission from the second AP; and transmit the first transmission after the multi-AP trigger frame, wherein the first transmission comprises the plurality of identified packets.

Example 33 includes the subject matter of Example 32, and optionally, wherein the payload-signaling information comprises numbering assignment information to indicate at least one of a Packet Number (PN) assignment for the j oint transmission, or a Sequence Number (SN) assignment for the joint transmission.

Example 34 includes the subject matter of Example 33, and optionally, wherein the PN assignment for the joint transmission comprises an assignment of a plurality of PNs to the plurality of identified packets, respectively.

Example 35 includes the subject matter of Example 33 or 34, and optionally, wherein the SN assignment for the joint transmission comprises an assignment of one or more SNs to one or more Medium Access Control (MAC) frames to include the plurality of identified packets.

Example 36 includes the subject matter of any one of Examples 33-35, and optionally, wherein the apparatus is configured to cause the first AP to transmit the first transmission comprising one or more Medium Access Control (MAC) frames comprising the plurality of identified packets, wherein the one or more MAC frames are assigned with one or more respective SNs according to the SN assignment, wherein the plurality of identified packets are assigned with a plurality of respective PNs according the PN assignment.

Example 37 includes the subject matter of any one of Examples 32-36, and optionally, wherein the apparatus is configured to cause the first AP to buffer the plurality of data packets in a plurality of Medium Access Control (MAC) frames received from the second AP via the backhaul link, wherein the plurality of MAC frames are assigned with a respective plurality of Sequence Numbers (SNs), wherein the plurality of data packets are assigned with a respective plurality of previously-assigned Packet Numbers (PNs), wherein the payload-signaling information comprises SN information to indicate one or more identified SNs of one or more respective identified MAC frames comprising the plurality of identified packets.

Example 38 includes the subject matter of any one of Examples 32-36, and optionally, wherein the apparatus is configured to cause the first AP to buffer the plurality of data packets assigned with a respective plurality of previously-assigned Packet Numbers (PNs) received from the second AP via the backhaul link, wherein the payload-signaling information comprises PN information to indicate a plurality of identified PNs of the plurality of identified packets, wherein the payload-signaling information comprises Sequence Number (SN) information to indicate an assignment of one or more SNs to one or more respective Medium Access Control (MAC) frames to include the plurality of identified packets.

Example 39 includes the subject matter of any one of Examples 32-36, and optionally, wherein the apparatus is configured to cause the first AP to buffer the plurality of data packets in a plurality of Medium Access Control (MAC) frames received from the second AP via the backhaul link, wherein the plurality of MAC frames are assigned with a respective plurality of Sequence Numbers (SNs), wherein the payload-signaling information comprises SN information to indicate one or more identified SNs of one or more respective identified MAC frames comprising the plurality of identified packets, wherein the payload-signaling information comprises Packet Number (PN) information to indicate an assignment of a plurality of PNs to the plurality of identified packets, respectively.

Example 40 includes the subject matter of any one of Examples 32-36, and optionally, wherein the apparatus is configured to cause the first AP to buffer the plurality of data packets in a plurality of Medium Access Control (MAC) frames received from the second AP via the backhaul link, wherein the plurality of MAC frames are assigned with a respective plurality of Dedicated Numbers (DNs), wherein the payload-signaling information comprises DN information to indicate one or more identified DNs of one or more respective identified MAC frames comprising the plurality of identified packets, wherein the payload-signaling information comprises Packet Number (PN) information to indicate an assignment of a plurality of PNs to the plurality of identified packets, respectively, wherein the payload-signaling information comprises Sequence Number (SN) information to indicate an assignment of one or more SNs to the one or more identified MAC frames.

Example 41 includes the subject matter of any one of Examples 32-36, and optionally, wherein the apparatus is configured to cause the first AP to buffer the plurality of data packets assigned with a respective plurality of Dedicated Numbers (DNs) received from the second AP via the backhaul link, wherein the payload-signaling information comprises DN information to indicate a plurality of identified DNs of the plurality of identified packets, wherein the payload-signaling information comprises Packet Number (PN) information to indicate an assignment of a plurality of PNs to the plurality of identified packets, respectively, wherein the payload-signaling information comprises Sequence Number (SN) information to indicate an assignment of one or more SNs to one or more respective Medium Access Control (MAC) frames to include the plurality of identified packets.

Example 42 includes the subject matter of any one of Examples 32-36, and optionally, wherein the apparatus is configured to cause the first AP to buffer the plurality of data packets in a plurality of Aggregated Medium Access Control (MAC) Protocol Data Units (MPDUs) (A-MPDUs) received from the second AP via the backhaul link, wherein the plurality of A-MPDUs are assigned with a respective plurality of A-MPDU numbers, wherein an A-MPDU of the plurality of A-MPDUs comprises a plurality of MAC frames assigned with a respective plurality of Sequence Numbers (SNs), wherein a MAC frame of the plurality of MAC frames in the A-MPDU comprises two or more data packets assigned with two or more respective Packet Numbers (PNs), wherein the payload-signaling information comprises A-MPDU number information to indicate one or more identified A-MPDUs comprising the plurality of identified packets.

Example 43 includes the subject matter of any one of Examples 32-42, and optionally, wherein the apparatus is configured to cause the first AP to process Sequence Number (SN) information in the payload-signaling information to identify an assignment of one or more SNs to one or more respective Medium Access Control (MAC) frames to include the plurality of identified packets.

Example 44 includes the subject matter of Example 43, and optionally, wherein the SN information comprises an SN start value and an SN bitmap.

Example 45 includes the subject matter of Example 43 or 44, and optionally, wherein the one or more MAC frames comprises one or more MAC Protocol Data Units (MPDUs).

Example 46 includes the subject matter of Example 43 or 44, and optionally, wherein the one or more MAC frames comprises one or more Aggregate MAC Service Data Units (A-MSDUs).

Example 47 includes the subject matter of any one of Examples 32-46, and optionally, wherein the apparatus is configured to cause the first AP to process Packet Number (PN) information in the payload-signaling information to identify an assignment of a plurality of PNs to the plurality of identified packets.

Example 48 includes the subject matter of Example 47, and optionally, wherein the PN information comprises a PN start value and an PN bitmap.

Example 49 includes the subject matter of any one of Examples 32-48, and optionally, wherein the apparatus is configured to cause the first AP to process the multi-AP trigger frame to identify an indication of an oldest Medium Access Control (MAC) Protocol Data Unit (MPDU), which is not to be discarded by the first AP.

Example 50 includes the subject matter of any one of Examples 32-49, and optionally, wherein the multi-AP trigger frame is configured to trigger the joint transmission of the plurality of identified packets in the second transmission and in a plurality of transmissions from a plurality of APs, respectively, wherein the plurality of APs comprises the first AP.

Example 51 includes the subject matter of any one of Examples 32-50, and optionally, wherein the multi-AP trigger frame is configured to trigger the joint transmission of the plurality of identified packets as a Multi-User (MU) transmission to a plurality of non-AP STAs comprising the non-AP STA.

Example 52 includes the subject matter of any one of Examples 32-51, and optionally, wherein the multi-AP trigger frame is configured to trigger the joint transmission comprising a joint-beamforming transmission configured as a beamformed Multiple-Input-Multiple-Output (MIMO) transmission to be formed by a combination of the first transmission and the second transmission.

Example 53 includes the subject matter of Example 52, and optionally, wherein the apparatus is configured to cause the first AP to configure a beamforming setting of the first transmission based on Physical layer (PHY) precoding information in the multi-AP trigger frame.

Example 54 includes the subject matter of any one of Examples 32-53, and optionally, wherein the multi-AP trigger frame is configured to trigger the joint transmission comprising substantially simultaneous transmission of the first transmission and the second transmission.

Example 55 includes the subject matter of any one of Examples 32-54, and optionally, wherein the apparatus is configured to cause the first AP to transmit the first transmission a Short-Inter-Frame-Space (SIFS) after the multi-AP trigger frame.

Example 56 includes the subject matter of any one of Examples 32-55, and optionally, wherein the plurality of data packets comprises a plurality of Medium Access Control (MAC) Service Data Units (MSDUs).

Example 57 includes the subject matter of any one of Examples 32-56, and optionally, comprising at least one radio to transmit the first transmission.

Example 58 includes the subject matter of Example 57, and optionally, comprising one or more antennas connected to the radio, and a processor to execute instructions of an operating system.

Example 59 comprises a wireless communication device comprising the apparatus of any of Examples 1-58.

Example 60 comprises a mobile device comprising the apparatus of any of Examples 1-58.

Example 61 comprises an apparatus comprising means for executing any of the described operations of any of Examples 1-58.

Example 62 comprises a product comprising one or more tangible computer-readable non-transitory storage media comprising instructions operable to, when executed by at least one processor, enable the at least one processor to cause a wireless communication device to perform any of the described operations of any of Examples 1-58.

Example 63 comprises an apparatus comprising: a memory interface; and processing circuitry configured to: perform any of the described operations of any of Examples 1-58.

Example 64 comprises a method comprising any of the described operations of any of Examples 1-58.

Functions, operations, components and/or features described herein with reference to one or more aspects, may be combined with, or may be utilized in combination with, one or more other functions, operations, components and/or features described herein with reference to one or more other aspects, or vice versa.

While certain features have been illustrated and described herein, many modifications, substitutions, changes, and equivalents may occur to those skilled in the art. It is, therefore, to be understood that the appended claims are intended to cover all such modifications and changes as fall within the true spirit of the disclosure.

## Claims

1. A method to be performed at a first Access Point (AP), the method comprising:
sending a plurality of data packets to a second AP via a backhaul link between the first AP and the second AP;
determining a plurality of identified packets from the plurality of data packets for a joint transmission to a non-AP wireless communication station (STA) associated with the first AP;
transmitting a multi-AP trigger frame to trigger the joint transmission comprising transmission of the plurality of identified packets in a first transmission from the first AP and in a second transmission from the second AP, wherein the multi-AP trigger frame comprises payload-signaling information configured to signal to the second AP that a payload of the second transmission is to include the plurality of identified packets; and
transmitting the first transmission after the multi-AP trigger frame, wherein the first transmission comprises the plurality of identified packets.

2. The method of claim 1, wherein the payload-signaling information comprises numbering assignment information to indicate at least one of a Packet Number (PN) assignment for the joint transmission, or a Sequence Number (SN) assignment for the joint transmission.

3. The method of claim 2, wherein the PN assignment for the joint transmission comprises an assignment of a plurality of PNs to the plurality of identified packets, respectively.

4. The method of claim 2 or 3, wherein the SN assignment for the joint transmission comprises an assignment of one or more SNs to one or more Medium Access Control (MAC) frames to include the plurality of identified packets.

5. The method of any one of claims 2-4 comprising transmitting the first transmission comprising one or more Medium Access Control (MAC) frames comprising the plurality of identified packets, wherein the one or more MAC frames are assigned with one or more respective SNs according to the SN assignment, wherein the plurality of identified packets are assigned with a plurality of respective PNs according the PN assignment.

6. The method of any one of claims 1-5 comprising sending the plurality of data packets in a plurality of Medium Access Control (MAC) frames to the second AP via the backhaul link, wherein the plurality of MAC frames are assigned with a respective plurality of Sequence Numbers (SNs), wherein the plurality of data packets are assigned with a respective plurality of previously-assigned Packet Numbers (PNs), wherein the payload-signaling information comprises SN information to indicate one or more identified SNs of one or more respective identified MAC frames comprising the plurality of identified packets.

7. The method of any one of claims 1-5 comprising sending the plurality of data packets assigned with a respective plurality of previously-assigned Packet Numbers (PNs) to the second AP via the backhaul link, wherein the payload-signaling information comprises PN information to indicate a plurality of identified PNs of the plurality of identified packets, wherein the payload-signaling information comprises Sequence Number (SN) information to indicate an assignment of one or more SNs to one or more respective Medium Access Control (MAC) frames to include the plurality of identified packets.

8. The method of any one of claims 1-5 comprising sending the plurality of data packets in a plurality of Medium Access Control (MAC) frames to the second AP via the backhaul link, wherein the plurality of MAC frames are assigned with a respective plurality of Sequence Numbers (SNs), wherein the payload-signaling information comprises SN information to indicate one or more identified SNs of one or more respective identified MAC frames comprising the plurality of identified packets, wherein the payload-signaling information comprises Packet Number (PN) information to indicate an assignment of a plurality of PNs to the plurality of identified packets, respectively.

9. The method of any one of claims 1-5 comprising sending the plurality of data packets in a plurality of Medium Access Control (MAC) frames to the second AP via the backhaul link, wherein the plurality of MAC frames are assigned with a respective plurality of Dedicated Numbers (DNs), wherein the payload-signaling information comprises DN information to indicate one or more identified DNs of one or more respective identified MAC frames comprising the plurality of identified packets, wherein the payload-signaling information comprises Packet Number (PN) information to indicate an assignment of a plurality of PNs to the plurality of identified packets, respectively, wherein the payload-signaling information comprises Sequence Number (SN) information to indicate an assignment of one or more SNs to the one or more identified MAC frames.

10. The method of any one of claims 1-5 comprising sending the plurality of data packets assigned with a respective plurality of Dedicated Numbers (DNs) to the second AP via the backhaul link, wherein the payload-signaling information comprises DN information to indicate a plurality of identified DNs of the plurality of identified packets, wherein the payload-signaling information comprises Packet Number (PN) information to indicate an assignment of a plurality of PNs to the plurality of identified packets, respectively, wherein the payload-signaling information comprises Sequence Number (SN) information to indicate an assignment of one or more SNs to one or more respective Medium Access Control (MAC) frames to include the plurality of identified packets.

11. The method of any one of claims 1-5 comprising sending the plurality of data packets in a plurality of Aggregated Medium Access Control (MAC) Protocol Data Units (MPDUs) (A-MPDUs) to the second AP via the backhaul link, wherein the plurality of A-MPDUs are assigned with a respective plurality of A-MPDU numbers, wherein an A-MPDU of the plurality of A-MPDUs comprises a plurality of MAC frames assigned with a respective plurality of Sequence Numbers (SNs), wherein a MAC frame of the plurality of MAC frames in the A-MPDU comprises two or more data packets assigned with two or more respective Packet Numbers (PNs), wherein the payload-signaling information comprises A-MPDU number information to indicate one or more identified A-MPDUs comprising the plurality of identified packets.

12. The method of any one of claims 1-11, wherein the multi-AP trigger frame is configured to trigger the joint transmission comprising a joint-beamforming transmission configured as a beamformed Multiple-Input-Multiple-Output (MIMO) transmission to be formed by a combination of the first transmission and the second transmission.

13. An apparatus comprising a controller configured to cause a first Access Point (AP) to perform the method of any one of claims 1-12.

14. The apparatus of claim 13 comprising at least one radio to transmit the multi-AP trigger frame and the first transmission, one or more antennas connected to the radio, and a processor to execute instructions of an operating system.

15. A product comprising one or more tangible computer-readable non-transitory storage media comprising instructions operable to, when executed by at least one processor, enable the at least one processor to cause a first Access Point (AP) to perform the method of any one of claims 1-12.
